(19) Europäisches Patentamt
European Patent Office
Office européen des brevets

(11) EP 4 701 097 A1

(12) EUROPEAN PATENT APPLICATION
published in accordance with Art. 153(4) EPC

(43) Date of publication:
**25.02.2026 Bulletin 2026/09**

(21) Application number: **24791808.9**

(22) Date of filing: **21.03.2024**

(51) International Patent Classification (IPC):
***H04B 7/185*** *(2006.01)*

(52) Cooperative Patent Classification (CPC):
**H04B 7/185**

(86) International application number:
**PCT/CN2024/083078**

(87) International publication number:
**WO 2024/217221 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.04.2023 CN 202310431470**

(71) Applicant: **Datang Mobile Communications Equipment Co., Ltd.**
**Beijing 100085 (CN)**

(72) Inventor: **CAO, Xing**
**Beijing 100085 (CN)**

(74) Representative: **Studio Torta S.p.A.**
**Via Viotti, 9**
**10121 Torino (IT)**

# (54) MEASUREMENT CONFIGURATION METHOD AND APPARATUS AND RELATED DEVICE

(57) A measurement configuration method includes: sending, by a first space-borne base station, a query request message to a second space-borne base station adjacent to the first space-borne base station; receiving a query response message sent by the second space-borne base station in response to the query request message; determining a measurement window configuration according to measurement configuration assistance information in the query response message; and sending the measurement window configuration to a terminal device, in which the measurement window configuration is used for an RRM measurement of an SSB signal of the second space-borne base station.

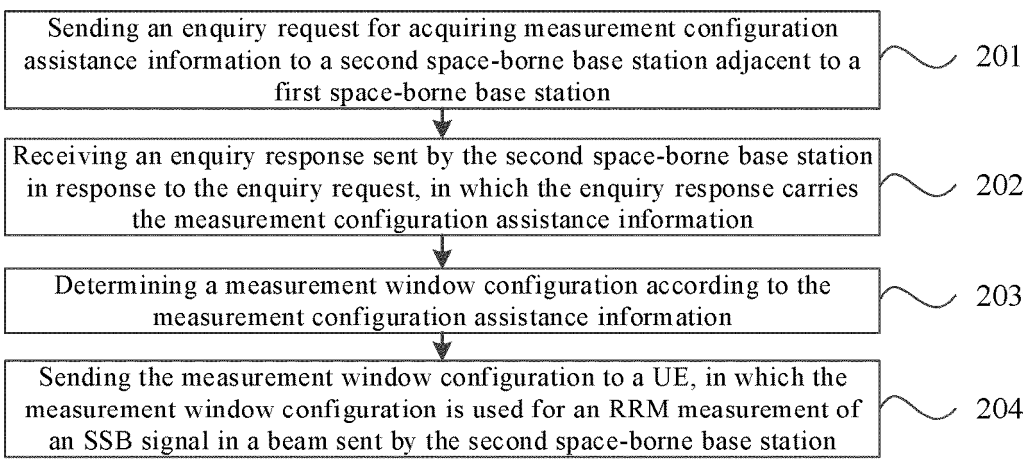


FIG. 2

EP 4 701 097 A1

# Description

## CROSS-REFERENCE TO RELATED APPLICATIONS

The present disclosure is based on and claims the priority of Chinese patent application No. 202310431470.2 filed on April 20, 2023, the entire content of which is incorporated herein by reference.

## TECHNICAL FIELD

The present disclosure relates to a field of wireless communication technologies, in particular to a measurement configuration method, a measurement configuration apparatus and a related device.

## BACKGROUND

When a serving satellite of a user equipment (UE) moves, the UE needs to perform a radio resource management (RRM) measurement on a synchronization signal and physical broadcast channel (PBCH) block (SSB) signal in a beam sent by a base station in a satellite (i.e., space-borne base station) adjacent to the serving satellite.

When a satellite system adopts a beam-hopping technology, since different satellites cover the same beam position at different times, it is difficult for the UE to accurately locate the SSB signal of the base station in the adjacent satellite (i.e., space-borne base station), and thus the UE cannot accurately perform the RRM measurement.

Therefore, in order to improve the reliability of the RRM measurement, it is very important to optimize a configuration method for the RRM measurement.

## SUMMARY

The present disclosure provides a measurement configuration method, a measurement configuration apparatus and a related device.

According to a first aspect of the present disclosure, a measurement configuration method is provided. The method is performed by a first space-borne base station, and includes: sending an enquiry request for acquiring measurement configuration assistance information to a second space-borne base station adjacent to the first space-borne base station; receiving an enquiry response sent by the second space-borne base station in response to the enquiry request, in which the enquiry response carries the measurement configuration assistance information; determining a measurement window configuration according to the measurement configuration assistance information; and sending the measurement window configuration to a UE, in which the measurement window configuration is used for an RRM measurement of an SSB signal in a beam sent by the second space-borne base station.

Optionally, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

Optionally, the grid information is used to indicate a grid where a plurality of UEs are located, and the plurality of UEs are located in a same grid.

Optionally, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

Optionally, determining the measurement window configuration according to the measurement configuration assistance information, includes: obtaining a system frame number (SFN) offset between the first space-borne base station and the second space-borne base station; and configuring a measurement window according to the measurement configuration assistance information and the SFN offset, and determining the measurement window configuration.

Optionally, the measurement window configuration includes a window duration, a window offset and a measurement periodicity of the measurement window; configuring the measurement window according to the measurement configuration assistance information and the SFN offset, and determining the measurement window configuration, includes: determining the window offset of the measurement window according to the time difference in the measurement configuration assistance information and the SFN offset; determining the window duration of the measurement window according to the dwell time in the measurement configuration assistance information and the SFN offset; and determining the measurement periodicity of the measurement window according to the beam periodicity in the measurement configuration assistance information.

Optionally, the RRM measurement includes at least one measurement, and the window offset includes a window offset corresponding to the at least one RRM measurement; determining the window offset of the measurement window according to the time difference in the measurement configuration assistance information and the SFN offset, including: obtaining a first offset by rounding the SFN offset; determining a window offset corresponding to a first RRM measurement in the at least one RRM measurement according to a sum of the first offset and the time difference; and determining a window offset corresponding to an RRM measurement other than the first RRM measurement in the at least one RRM measurement according to a difference between the window offset corresponding to the first RRM measurement and the SFN offset.

Optionally, determining the window duration of the measurement window according to the dwell time in the measurement configuration assistance information and the SFN offset, includes: determining a second offset according to a sum of the dwell time and the SFN offset; obtaining a first offset by rounding the SFN offset; and determining the window duration of the measurement window according to a difference between the second offset and the first offset.

Optionally, sending the measurement window configuration to the UE, includes: sending a radio resource control (RRC) reconfiguration message to the UE, in which the RRC reconfiguration message carries the measurement window configuration.

Optionally, the method includes: receiving a measurement result sent by the UE, in which the measurement result is obtained by the UE by performing the RRM measurement on the SSB signal.

According to a second aspect of the present disclosure, another measurement configuration method is provided. The method is performed by a second space-borne base station, and includes: receiving an enquiry request sent by a first space-borne base station adjacent to the second space-borne base station; in response to the enquiry request, obtaining measurement configuration assistance information; sending an enquiry response carrying the measurement configuration assistance information to the first space-borne base station; in which the measurement configuration assistance information is used to determine a measurement window configuration, and the measurement window configuration is used for an RRM measurement of an SSB signal in a beam sent by the second space-borne base station.

Optionally, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

Optionally, the grid information is used to indicate a grid where a plurality of UEs are located, and the plurality of UEs are located in a same grid.

Optionally, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

Optionally, in response to the enquiry request, obtaining the measurement configuration assistance information, includes: obtaining location information of center points of a plurality of beam positions in the beam position scanning sequence; determining the beam position where the UE is located among the plurality of beam positions according to the location information of the center points of the plurality of beam positions and the enquiry request; determining the second time according to the beam position where the UE is located, the beam position scanning sequence and the dwell time of the beam; and obtaining the first time, and generating the measurement configuration assistance information according to the time difference between the first time and the second time, the dwell time of the beam and the beam periodicity of the beam.

Optionally, determining the beam position where the UE is located among the plurality of beam positions according to the location information of the center points of the plurality of beam positions and the enquiry request, includes: in a case that the enquiry request includes the location information of the UE, determining distances between the UE and the center points of the plurality of beam positions according to the location information of the UE and the location information of the center points of the plurality of beam positions; and determining the beam position where the UE is located among the plurality of beam positions according to the distances between the UE and the center points of the plurality of beam positions.

Optionally, determining the beam position where the UE is located among the plurality of beam positions according to the distances between the UE and the center points of the plurality of beam positions, includes: determining whether a distance between the UE and a center point of any beam position of the plurality of beam positions is less than a beam position radius of the any beam position; in a case that the distance between the UE and the center point of the any beam position is less than the beam position radius of the any beam position, determining that the any beam position is the beam position where the UE is located; and in a case that the distance between the UE and the center point of the any beam position is greater than or equal to the beam position radius of the any beam position, determining that the any beam position is not the beam position where the UE is located.

Optionally, determining the beam position where the UE is located among the plurality of beam positions according to the location information of the center points of the plurality of beam positions and the enquiry request, includes: in a case that the enquiry request includes the grid information, determining location information of a grid center of the grid where the UE is located according to the grid information; determining distances between the grid center and the center points of the plurality of beam positions according to the location information of the grid center and the location information of the center points of the plurality of beam positions; and determining the beam position where the UE is located among the plurality of beam positions according to the distances between the grid center and the center points of the plurality of beam positions.

Optionally, a distance between a center point of the beam position where the UE is located and the grid center is less than a distance between a center point of any beam position of the plurality of beam positions other than the beam position where the UE is located and the grid center.

According to a third aspect of the present disclosure, yet another measurement configuration method is provided. The method is performed by a UE, and includes: receiving a measurement window configuration sent by a first space-borne base station, in which the measurement window configuration is determined according to measurement configuration assistance information sent by a second space-borne base station adjacent to the first space-borne base station; and obtaining a measurement result by performing an RRM measurement on an SSB signal in a beam sent by the second space-borne base station according to the measurement window configuration.

Optionally, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

Optionally, the measurement window configuration includes a window duration, a window offset and a measurement periodicity of the measurement window; the window duration is determined according to an SFN offset between the first space-borne base station and the second space-borne base station and the time difference; the window offset is determined according to the SFN offset and the dwell time; and the measurement periodicity is determined according to the beam periodicity.

Optionally, the method further includes: sending the measurement result to the first space-borne base station.

According to a fourth aspect of the present disclosure, a first space-borne base station is provided. The first space-borne base station includes: a memory, a transceiver and a processor. The memory is configured to store a computer program; the transceiver is configured to transmit and receive data under the control of the processor; and the processor is configured to read the computer program in the memory and perform the following operations: sending an enquiry request for acquiring measurement configuration assistance information to a second space-borne base station adjacent to the first space-borne base station; receiving an enquiry response sent by the second space-borne base station in response to the enquiry request, in which the enquiry response carries the measurement configuration assistance information; determining a measurement window configuration according to the measurement configuration assistance information; and sending the measurement window configuration to a UE, in which the measurement window configuration is used for an RRM measurement of an SSB signal in a beam sent by the second space-borne base station.

Optionally, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

Optionally, the grid information is used to indicate a grid where a plurality of UEs are located, and the plurality of UEs are located in the same grid.

Optionally, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

Optionally, the processor is configured to: obtain an SFN offset between the first space-borne base station and the second space-borne base station; and configure a measurement window according to the measurement configuration assistance information and the SFN offset, and determine the measurement window configuration.

Optionally, the measurement window configuration includes a window duration, a window offset and a measurement periodicity of the measurement window. The processor is configured to: determine the window offset of the measurement window according to the time difference in the measurement configuration assistance information and the SFN offset; determine the window duration of the measurement window according to the dwell time in the measurement configuration assistance information and the SFN offset; and determine the measurement periodicity of the measurement window according to the beam periodicity in the measurement configuration assistance information.

Optionally, the RRM measurement includes at least one measurement, and the window offset includes a window offset corresponding to the at least one RRM measurement. The processor is configured to: obtain a first offset by rounding the SFN offset; determine a window offset corresponding to a first RRM measurement in the at least one RRM measurement according to a sum of the first offset and the time difference; and determine a window offset corresponding to an RRM measurement other than the first RRM measurement in the at least one RRM measurement according to a difference between the window offset corresponding to the first RRM measurement and the SFN offset.

Optionally, the processor is configured to: determine a second offset according to a sum of the dwell time and the SFN offset; obtain a first offset by rounding the SFN offset; and determine the window duration of the measurement window according to a difference between the second offset and the first offset.

Optionally, the processor is configured to: send an RRC reconfiguration message to the UE, in which the RRC reconfiguration message carries the measurement window configuration.

Optionally, the processor is further configured to: receive a measurement result sent by the UE, in which the measurement result is obtained by the UE by performing the RRM measurement on the SSB signal.

According to a fifth aspect of the present disclosure, a second space-borne base station is provided. The second space-borne base station includes: a memory, a transceiver and a processor. The memory is configured to store a computer program; the transceiver is configured to transmit and receive data under the control of the processor; and the processor is configured to read the computer program in the memory and perform the following operations: receiving an enquiry request sent by a first space-borne base station adjacent to the second space-borne base station; in response to the enquiry request, obtaining measurement configuration assistance information; sending an enquiry response carrying the measurement configuration assistance in formation to the first space-borne base station; in which the measurement configuration assistance information is used to determine a measurement window configuration, and the measurement window configuration is used for an RRM measurement of an SSB signal in a beam sent by the second space-borne base station.

Optionally, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

Optionally, the grid information is used to indicate a grid where a plurality of UEs are located, and the plurality of UEs are located in the same grid.

Optionally, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

Optionally, the processor is configured to: obtain location information of center points of a plurality of beam positions in the beam position scanning sequence; determine the beam position where the UE is located among the plurality of beam positions according to the location information of the center points of the plurality of beam positions and the enquiry request; determine the second time according to the beam position where the UE is located, the beam position scanning sequence and the dwell time of the beam; and obtain the first time, and generate the measurement configuration assistance information according to the time difference between the first time and the second time, the dwell time of the beam and the beam periodicity of the beam.

Optionally, the processor is configured to: in a case that the enquiry request includes the location information of the UE, determine distances between the UE and the center points of the plurality of beam positions according to the location information of the UE and the location information of the center points of the plurality of beam positions; and determine the beam position where the UE is located among the plurality of beam positions according to the distances between the UE and the center points of the plurality of beam positions.

Optionally, the processor is configured to: determine whether a distance between the UE and a center point of any beam position of the plurality of beam positions is less than a beam position radius of the any beam position; in a case that the distance between the UE and the center point of the any beam position is less than the beam position radius of the any beam position, determine that the any beam position is the beam position where the UE is located; and in a case that the distance between the UE and the center point of the any beam position is greater than or equal to the beam position radius of the any beam position, determine that the any beam position is not the beam position where the UE is located.

Optionally, the processor is configured to: in a case that the enquiry request includes the grid information, determine location information of a grid center of the grid where the UE is located according to the grid information; determine distances between the grid center and the center points of the plurality of beam positions according to the location information of the grid center and the location information of the center points of the plurality of beam positions; and determine the beam position where the UE is located among the plurality of beam positions according to the distances between the grid center and the center points of the plurality of beam positions.

Optionally, a distance between a center point of the beam position where the UE is located and the grid center is less than a distance between a center point of any beam position of the plurality of beam positions other than the beam position where the UE is located and the grid center.

According to a sixth aspect of the present disclosure, a UE is provided. The UE includes: a memory, a transceiver and a processor.

The memory is configured to store a computer program; the transceiver is configured to transmit and receive data under the control of the processor; and the processor is configured to read the computer program in the memory and perform the following operations: receiving a measurement window configuration sent by a first space-borne base station, in which the measurement window configuration is determined according to measurement configuration assistance information sent by a second space-borne base station adjacent to the first space-borne base station; and obtaining a measurement result by performing an RRM measurement on an SSB signal in a beam sent by the second space-borne base station according to the measurement window configuration.

Optionally, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

Optionally, the measurement window configuration includes a window duration, a window offset and a measurement periodicity of the measurement window; in which the window duration is determined according to an SFN offset between the first space-borne base station and the second space-borne base station and the time difference; the window offset is determined according to the SFN offset and the dwell time; and the measurement periodicity is determined according to the beam periodicity.

Optionally, the processor is further configured to: send the measurement result to the first space-borne base station.

According to a seventh aspect of the present disclosure, a measurement configuration apparatus is provided. The apparatus is applied to a first space-borne base station, and includes:

a sending module, configured to send an enquiry request for acquiring measurement configuration assistance information to a second space-borne base station adjacent to the first space-borne base station;

a receiving module, configured to receive an enquiry response sent by the second space-borne base station in response to the enquiry request, in which the enquiry response carries the measurement configuration assistance information;

a determining module, configured to determine a measurement window configuration according to the measurement configuration assistance information; and

the sending module, further configured to send the measurement window configuration to a UE, in which the measurement window configuration is used for an RRM measurement of an SSB signal in a beam sent by the second space-borne base station.

According to an eighth aspect of the present disclosure, another measurement configuration apparatus is provided. The apparatus is applied to a second space-borne base station, and includes:

a receiving module, configured to receive an enquiry request sent by a first space-borne base station adjacent to the second space-borne base station;

an obtaining module, configured to, in response to the enquiry request, obtain measurement configuration assistance information;

a sending module, configured to send an enquiry response carrying the measurement configuration assistance information to the first space-borne base station;

in which the measurement configuration assistance information is used to determine a measurement window configuration, and the measurement window configuration is used for an RRM measurement of an SSB signal in a beam sent by the second space-borne base station.

According to a ninth aspect of the present disclosure, yet another measurement configuration apparatus is provided. The apparatus is applied to a UE, and includes:

a receiving module, configured to receive a measurement window configuration sent by a first space-borne base station, in which the measurement window configuration is determined according to measurement configuration assistance information sent by a second space-borne base station adjacent to the first space-borne base station; and

a measurement module, configured to obtain a measurement result by performing an RRM measurement on an SSB signal in a beam sent by the second space-borne base station according to the measurement window configuration.

According to a tenth aspect of the present disclosure, a processor-readable storage medium is provided. The processor-readable storage medium stores computer programs, and the computer programs are used to cause a processor to implement the measurement configuration method of any of the embodiments described above.

According to an eleventh aspect of the present disclosure, a computer program product is provided. The computer program product includes a computer program, and when the computer program is executed by a processor, the measurement configuration method of any of the embodiments described above in the present disclosure is implemented.

According to a twelfth aspect of the present disclosure, a communication device is provided. The communication device includes: a processor and a memory configured to store instructions executable by the processor. The processor is configured to implement the measurement configuration method of any of the embodiments described above in the present disclosure.

According to the measurement configuration method, the measurement configuration apparatus and the related device provided by the embodiments of the present disclosure, the first space-borne base station first sends the enquiry request for acquiring the measurement configuration assistance information to the adjacent second space-borne base station, and then it receives the enquiry response sent by the second space-borne base station in response to the enquiry request, in which the enquiry response carries the measurement configuration assistance information. Then, the first space-borne base station determines the measurement window configuration according to the measurement configuration assistance information, and sends the measurement window configuration to the UE, in which the measurement window configuration is used for the RRM measurement of the SSB signal in the beam sent by the second space-borne base station. Therefore, the second space-borne base station sends the measurement configuration assistance information to the first space-borne base station serving the UE, to facilitate the first space-borne base station to reasonably configure the measurement window through an SSB-measurement timing configuration (MTC) and to obtain the measurement window configuration. Moreover, the first space-borne base station sends the measurement window configuration to the UE, so that the UE can perform the RRM measurement within the measurement window configured according to the measurement window configuration, which can solve a problem that the UE cannot receive the SSB signal in the beam sent by the second space-borne base station in a beam hopping scenario, improve the reliability of the RRM measurement, and improve the performance of the communication system.

It should be understood that the content described in this section is not intended to identify key or important features of the embodiments of the present disclosure, nor is it intended to limit the scope of the present disclosure. Additional features of the present disclosure will be easily understood from the following description.

## BRIEF DESCRIPTION OF THE DRAWINGS

The accompanying drawings are used to better understand this solution and do not constitute a limitation to the present disclosure, in which:

FIG. 1 is a schematic flowchart of an RRM measurement procedure in related arts.

FIG. 2 is a schematic flowchart of a measurement configuration method provided by an embodiment of the present disclosure.

FIG. 3 is a schematic flowchart of a measurement configuration method provided by an embodiment of the present disclosure.

FIG. 4 is a schematic flowchart of a measurement configuration method provided by an embodiment of the present disclosure.

FIG. 5 is a schematic flowchart of a measurement configuration method provided by an embodiment of the present disclosure.

FIG. 6 is a schematic flowchart of a measurement configuration method provided by an embodiment of the present disclosure.

FIG. 7 is a schematic flowchart of a measurement configuration method provided by an embodiment of the present disclosure.

FIG. 8 is a schematic flowchart of an RRM measurement procedure in a beam hopping scenario provided by an embodiment of the present disclosure.

FIG. 9 is a schematic diagram of a measurement window configuration provided by an embodiment of the present disclosure.

FIG. 10 is a schematic diagram of determining a window offset based on a measurement window configuration provided by an embodiment of the present disclosure.

FIG. 11 is a schematic structural diagram of a first space-borne base station provided by an embodiment of the present disclosure.

FIG. 12 is a schematic structural diagram of a second space-borne base station provided by an embodiment of the present disclosure.

FIG. 13 is a schematic structural diagram of a UE provided by an embodiment of the present disclosure.

FIG. 14 is a schematic structural diagram of a measurement configuration apparatus provided by an embodiment of the present disclosure.

FIG. 15 is a schematic structural diagram of a measurement configuration apparatus provided by an embodiment of the present disclosure.

FIG. 16 is a schematic structural diagram of a measurement configuration apparatus provided by an embodiment of the present disclosure.

## DETAILED DESCRIPTION

In the embodiments of the present disclosure, the term "and/or" describes association relationships of associated objects, and indicates three relationships. For example, "A and/or B" indicates that A exists alone, A and B both exist, and B exists alone. The character "/" generally indicates that associated objects before and after the character "/" are in an "or" relationship.

In the embodiments of the present disclosure, "a plurality of" refers to two or more, and other quantifiers are similar thereto.

The technical solutions in the embodiments of the present disclosure will be clearly and completely described below in combination with the drawings in the embodiments of the present disclosure. Obviously, the described embodiments are only part of the embodiments of the present disclosure, not all of the embodiments. Based on the embodiments of the present disclosure, other embodiments obtained by those skilled in the art without inventive works shall fall within the scope of protection of the present disclosure.

In a mobile communication system, as a UE moves, its channel condition changes constantly. In order to support the mobility of the UE, the channel condition of current surrounding cells of the UE needs to be acquired in a timely manner. Therefore, a space-borne base station in a serving satellite can configure the UE to perform an RRM measurement.

The UE, in an idle state or an inactive state, can perform cell selection or cell reselection based on an RRM measurement result. The UE, after switching to a connected state, can report the RRM measurement result to the space-borne base station in the serving satellite, to assist the space-borne base station in making a handover decision. The measurement procedure for the UE in a connected state will be introduced below.

1. The measurement procedure is as shown in FIG. 1.

The RRM measurement procedure of a satellite communication system in a connected state is the same as that of new radio (NR). A space-borne base station configures a measurement object, a measurement event, a measurement periodicity, etc. in an RRC reconfiguration message (i.e., RRCReconfiguration), and a UE performs the RRM measurement according to the above configuration and obtains a measurement result. When a trigger condition is met, the UE will report the measurement result by sending a measurement report to the space-borne base station.

2. SSB signal measurement in a neighboring cell.

In a satellite communication system, a space-borne base station configures a measurement window for a UE through an SSB Measurement Timing Configuration (SSB-MTC) information element, which includes information on a periodicity, an offset and a window duration of the measurement window, and is presented in the unit of a sub-frame.

A system frame number (SFN) in the measurement window is determined with the following equation:

$$\text{SFN mod T} = (\text{FLOOR}(\text{Offset}/10));$$

where T=CEIL(Periodicity/10), a CEIL function is used to return a minimum integer greater than or equal to a specified number (i.e., round up), and a FLOOR function is used to return a maximum integer less than or equal to a specified number (i.e., round down).

A sub-frame (sf) number is determined by the following equation.

If the periodicity is greater than sf5 (5 sub-frames), sub-frame = Offset mod 10;

If the periodicity is equal to sf5, sub-frame=Offset or (Offset+5).

The UE can perform the RRM measurement on the SSB signal in the beam sent by the space-borne base station in an adjacent satellite through the measurement window configured by the space-borne base station in a serving satellite. However, in a beam-hopping satellite system, beam hopping occurs at different beam positions, it stays at each wave position for only a period of time to serve a UE at the beam position it covers. In this scenario, for a UE at a certain beam position, beams from the serving satellite and the adjacent satellite may arrive at the beam position at different times, which may cause the following problems.

(1) The UE may not be able to receive the SSB signal in the beam sent by the space-borne base station in the adjacent satellite through the measurement window configured by the space-borne base station in the serving satellite, so it is necessary to determine a time of arrival of the beam sent by the space-borne base station in the adjacent satellite in combination with location information of the UE.

(2) If the space-borne base station in the serving satellite configures a longer measurement window, it may have a certain impact on data transmission and may reduce the performance of the system, so it is only necessary to perform the RRM measurement when the beam resides here.

(3) Since beam hopping is periodic, the periodicity of the measurement window needs to take into account the influence of the periodicity of beam hopping.

Therefore, existing measurement configuration methods in related arts cannot meet the requirements of the beam hopping scenario. In order to accurately receive the SSB signal in the beam sent by the space-borne base station in the adjacent satellite within a shorter measurement window, the space-borne base station in the serving satellite is required to acquire the time of arrival of the beam sent by the space-borne base station in the adjacent satellite, and to indicate the UE to start measurement at the time of arrival. Therefore, it is necessary to obtain relevant information from the space-borne base station in the adjacent satellite, to assist the space-borne base station in the serving satellite in configuring the measurement window for an adjacent satellite.

Therefore, in order to solve the above problems, the embodiments of the present disclosure provide a measurement configuration method, a measurement configuration apparatus and a related device, and the method and the apparatus are based on the same application concept. Since the principles of solving the problems by the method and the apparatus are similar, the implementations of the method and the apparatus can refer to each other, which will not be repeated.

A measurement configuration method, a measurement configuration apparatus and a related device provided by the present disclosure will be described in detail with reference to the accompanying drawings.

FIG. 2 is a schematic flowchart of a measurement configuration method provided by an embodiment of the present disclosure.

The measurement configuration method of the embodiment of the present disclosure is performed by a first space-borne base station. The first space-borne base station is a serving base station of a UE or a base station on a serving satellite.

The base station may include a plurality of cells that provide services for the UE. In different application scenarios, the base station may also be referred to as an access point, or a device in an access network that communicates with a wireless UE through one or more sectors over a radio interface, or other names. A network device may be used to exchange received radio frames with internet protocol (IP) packets as a router between the wireless UE and the rest of the access network. The rest of the access network may include an IP communication network. The network device may also coordinate the attribute management of the radio interface. For example, the network device involved in the embodiment of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in a long term evolution (LTE) system, a 5$^{th}$ generation (5G) gNodeB (gNB) in a 5G network architecture or a next generation system of 5G, a home evolved Node B (HeNB), a relay node, a femto, a pico, etc., which is not limited in the embodiment of the present disclosure. In some network structures, the base station may include a centralized unit (CU) node and a distributed unit (DU) node. The CU and the DU may also be separated geographically.

The UE may be a device that provides voice and/or data connectivity to a user, a handheld device with a wireless connection function, or other processing devices connected to a wireless modem. In different systems, the UE can be called by different names. For example, in a 5G system, the UE may refers to a user equipment. The wireless UE may communicate with one or more core networks (CN) via a radio access network (RAN). The wireless UE may be a mobile UE, such as a mobile phone (or "cellular" phone) or a computer with a mobile UE, for example, a portable, pocket-sized, handheld, computer-built-in or vehicle-mounted mobile device, which can exchange language and/or data with the RAN. For example, the UE may be a personal communication service (PCS) phone, a cordless phone, a session initiated protocol (SIP) phone, a wireless local loop (WLL) station, or a personal digital assistant (PDA). The wireless UE may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

As illustrated in FIG. 2, the measurement configuration method includes the following steps.

At step 201, an enquiry request for acquiring measurement configuration assistance information is sent to a second space-borne base station adjacent to a first space-borne base station.

In the embodiment of the present disclosure, the second space-borne base station is a base station adjacent to the first space-borne base station. For example, a satellite where the second space-borne base station is located is adjacent to a satellite where the first space-borne base station is located.

In the embodiment of the present disclosure, the first space-borne base station sends the enquiry request to the second space-borne base station. The enquiry request is used for acquiring the measurement configuration assistance information.

At step 202, an enquiry response sent by the second space-borne base station in response to the enquiry request is received, in which the enquiry response carries the measurement configuration assistance information.

In the embodiment of the present disclosure, after receiving the enquiry request, in response to the enquiry request, the second space-borne base station acquires the measurement configuration assistance information, and send the enquiry response carrying the measurement configuration assistance information to the first space-borne base station. Correspondingly, the first space-borne base station receives the enquiry response sent by the second space-borne base station.

At step 203, a measurement window configuration is determined according to the measurement configuration assistance information.

In the embodiment of the present disclosure, the first space-borne base station configures the measurement window according to the measurement configuration assistance information in the enquiry response and determines the measurement window configuration.

At step 204, the measurement window configuration is sent to a UE, in which the measurement window configuration is used for an RRM measurement on an SSB signal in a beam sent by the second space-borne base station.

In the embodiment of the present disclosure, the first space-borne base station sends the measurement window configuration to the UE. Correspondingly, the UE receives the measurement window configuration, and performs the RRM measurement on the SSB signal in the beam sent by the second space-borne base station according to the measurement window configuration.

In the measurement configuration method provided by the embodiments of the present disclosure, the first space-borne base station first sends the enquiry request for acquiring the measurement configuration assistance information to the adjacent second space-borne base station, and then receives the enquiry response sent by the second space-borne base station in response to the enquiry request, in which the enquiry response carries the measurement configuration assistance information. Then, the first space-borne base station determines the measurement window configuration according to the measurement configuration assistance information, and sends the measurement window configuration to the UE, in which the measurement window configuration is used for the RRM measurement on the SSB signal in the beam sent by the second space-borne base station. Therefore, the second space-borne base station sends the measurement configuration assistance information to the first space-borne base station serving the UE, to facilitate the first space-borne base station to reasonably configure the measurement window through the SSB-MTC and to obtain the measurement window configuration. Moreover, the first space-borne base station sends the measurement window configuration to the UE, so that the UE can perform the RRM measurement within the measurement window configured according to the measurement window configuration, which can solve a problem that the UE cannot receive the SSB signal in the beam sent by the second space-borne base station in a beam hopping scenario, improve the reliability of the RRM measurement, and improve the performance of the communication system.

FIG. 3 is a schematic flowchart of another measurement configuration method provided by an embodiment of the present disclosure.

As illustrated in FIG. 3, the measurement configuration method is performed by a first space-borne base station, and includes the following steps.

At step 301, an enquiry request for acquiring measurement configuration assistance information is sent to a second space-borne base station adjacent to the first space-borne base station.

Step 301 can be implemented in any of the embodiments of the present disclosure, which is not limited and will not be repeated here.

In any embodiment of the present disclosure, the enquiry request includes at least one of the two following items:

(1) location information (LocationInfo) used to indicate a location of the UE; or

As an example, the location information may include longitude information (ueLongitude) and latitude information (ueLatitude) of the location of the UE.

(2) grid information (GridInfo) used to indicate a grid where the UE is located.

As an example, the grid information includes latitude information of a first boundary and longitude information of a second boundary of the grid where the UE is located, and the first boundary is adjacent to the second boundary.

For example, if the first boundary includes a top and a bottom of the grid where the UE is located, and the second boundary includes a left boundary and a right boundary of the grid where the UE is located, the grid information includes latitude information of the top (topLatitude), latitude information of the bottom (bottomLatitude), longitude information of the left boundary (leftLongitude) and longitude information of the right boundary (rightLongitude) of the grid where the UE is located.

It should be noted that in an actual satellite communication system, there may be many UEs in an overlapped coverage area of two adjacent space-borne base stations. If the first space-borne base station sends location information of these UEs to the second space-borne base station, it will cause a large signaling overhead.

In order to reduce the signaling overhead between the space-borne base stations, the grid information can be used to identify the locations of the UEs. The ground area is divided into a plurality of grids, and each grid includes a plurality of UEs. After determining the location information of each UE, the first space-borne base station determines a grid where each UE is located according to the location information of the UE, and sends the grid information of all the UEs to the second space-borne base station. The grid information includes the latitude information of the first boundary and the longitude information of the second boundary of the grid. The second space-borne base station determines longitude information and latitude information of a grid center according to the grid information, and then determines a beam position where the UEs are located according to the longitude information and the latitude information of the grid center and longitude information and latitude information of a center point of each beam position. Afterwards, the second space-borne base station determines the measurement configuration assistance information according to the beam position where the UEs are located in combination with the beam position scanning sequence, which will be described in following embodiments and will not be repeated here.

That is, in order to reduce the signaling overhead between the space-borne base stations, in any embodiment of the present disclosure, the grid information may indicate a grid in which a plurality of UEs are located, i.e., the plurality of UEs are in the same grid. That is, the enquiry request sent by the first space-borne base station to the second space-borne base station includes the grid information of the same grid in which the plurality of UEs are located, which indicates that the plurality of UEs are in the same grid.

In conclusion, for all the UEs located in the same grid, the first space-borne base station only needs to send one piece of grid information, without having to send the location information of each UE, thereby reducing the signaling overhead.

At step 302, an enquiry response sent by the second space-borne base station in response to the enquiry request is received, in which the enquiry response carries the measurement configuration assistance information.

Step 302 can be implemented in any of the embodiments of the present disclosure, which is not limited and will not be repeated here.

In any embodiment of the present disclosure, the measurement configuration assistance information includes the following three items:

(1) a time difference between a first time and a second time, in which the first time is a time when the beam arrives at a first beam position in a beam position scanning sequence, and the second time is a time when the beam arrives at a beam position where the UE is located;
The beam is sent by the second space-borne base station, and includes an SSB signal.
(2) a dwell time of the above beam; and
(3) a beam periodicity of the above beam.

At step 303, an SFN offset between the first space-borne base station and the second space-borne base station is obtained.

In the embodiment of the present disclosure, the first space-borne base station knows the SFN offset between itself and the adjacent second space-borne base station.

At step 304, a measurement window is configured according to the measurement configuration assistance information and the SFN offset, and a measurement window configuration is determined.

The measurement window configuration includes a window duration, a window offset and a measurement periodicity of the measurement window.

In the embodiment of the present disclosure, the first space-borne base station configures the measurement window according to the measurement configuration assistance information and the SFN offset, and determines the measurement window configuration.

At step 305, the measurement window configuration is sent to a UE, in which the measurement window configuration is used for an RRM measurement on an SSB signal in a beam sent by the second space-borne base station.

Step 305 can be implemented in any of the embodiments of the present disclosure, which is not limited and will not be repeated here.

In any embodiment of the present disclosure, the first space-borne base station may send the measurement window configuration to the UE through an RRC reconfiguration message (i.e., RRCReconfiguration). That is, the first space-borne base station may send the RRCReconfiguration carrying the measurement window configuration to the UE.

In any embodiment of the present disclosure, after receiving the measurement window configuration, the UE performs the RRM measurement on the SSB signal in the beam sent by the second space-borne base station according to the measurement window configuration to obtain a measurement result, and then sends the measurement result to the first space-borne base station. For example, the UE may send the measurement result to the first space-borne base station through a measurement report.

In the measurement configuration method of the embodiment of the present disclosure, the second space-borne base station provides the measurement configuration assistance information to the first space-borne base station serving the UE, so that the first space-borne base station can reasonably configure the measurement window through the SSB-MTC according to the measurement configuration assistance information and the SFN offset between the first space-borne base station and the second space-borne base station, and obtain the measurement window configuration. The first space-borne base station then sends the measurement window configuration to the UE, and the UE performs the RRM measurement within the measurement window configured according to the measurement window configuration, which can solve a problem that the UE cannot receive the SSB signal in the beam sent by the second space-borne base station in a beam hopping scenario, improve the reliability of the RRM measurement and improve the performance of the communication system.

FIG. 4 is a schematic flowchart of another measurement configuration method provided by an embodiment of the present disclosure.

As illustrated in FIG. 4, the measurement configuration method is performed by a first space-borne base station, and includes the following steps.

At step 401, an enquiry request for acquiring measurement configuration assistance information is sent to a second space-borne base station adjacent to the first space-borne base station.

At step 402, an enquiry response sent by the second space-borne base station in response to the enquiry request is received, in which the enquiry response carries the measurement configuration assistance information.

At step 403, an SFN offset between the first space-borne base station and the second space-borne base station is obtained.

Steps 401-403 can be implemented in any of the embodiments of the present disclosure, which is not limited and will not be repeated here.

At step 404, a window offset of a measurement window is determined according to a time difference in the measurement configuration assistance information and the SFN offset.

In the embodiment of the present disclosure, the measurement configuration assistance information may include the time difference. The time difference refers to a time difference between a first time and a second time. The first time is a time when the beam arrives at a first beam position in a beam position scanning sequence, and the second time is a time when the beam arrives at a beam position where the UE is located.

In the embodiment of the present disclosure, the first space-borne base station determines the window offset of the measurement window according to the above time difference and the SFN offset.

In a possible implementation of the embodiment of the present disclosure, the window offset is determined, for example, by rounding (e.g., rounding down) the SFN offset to obtain a first offset, and determining the window offset of the measurement window according to a sum of the first offset and the above time difference.

As a possible implementation, the RRM measurement may include at least one measurement, and the window offset may include a window offset corresponding to the at least one RRM measurement. The window offset corresponding to each RRM measurement is determined, for example, by determining a window offset corresponding to a first RRM measurement in the at least one RRM measurement according to the sum of the first offset and the time difference, and determining a window offset corresponding to an RRM measurement other than the first RRM measurement in the at least one RRM measurement according to a difference between the window offset corresponding to the first RRM measurement and the SFN offset.

For example, if *a* represents the time difference and *x* represents the SFN offset, the window offset corresponding to the first RRM measurement is $a$+floor($x$), where floor(x) is the first offset. The window offset corresponding to the RRM measurement other than the first RRM measurement is: $a$+floor($x$)-$x$.

For example, if the SFN offset x of the second space-borne base station relative to the first space-borne base station is 1.5 sub-frames and the time difference *a* is 3 sub-frames, the window offset corresponding to the first RRM measurement is 3+1=4 sub-frames, and the window offset corresponding to the RRM measurement other than the first RRM measurement is 4-1.5=2.5 sub-frames.

At step 405, a window duration of the measurement window is determined according to a dwell time in the measurement configuration assistance information and the SFN offset.

In the embodiment of the present disclosure, the measurement configuration assistance information may include the dwell time of the beam. The beam is sent by the second space-borne base station, and includes an SSB signal.

In the embodiment of the present disclosure, the first space-borne base station determines the window duration of the measurement window according to the dwell time of the beam and the SFN offset.

In a possible implementation of the embodiment of the present disclosure, the window duration is determined, for example, by determining a second offset according to a sum of the dwell time of the beam and the SFN offset, obtaining the first offset by rounding (e.g., rounding down) the SFN offset, and determining the window duration of the measurement window according to a difference between the second offset and the first offset.

For example, if *x* represents the SFN offset and *b* represents the dwell time of the beam, the window duration is b+x-floor(x), where the floor(x) represents the first offset, and *(b+x)* represents the second offset.

For example, if the SFN offset x is 1.5 sub-frames and the dwell time b of the beam is 1 sub-frame, the window duration of the measurement window is 1+1.5-1=1.5 sub-frames.

At step 406, a measurement periodicity of the measurement window is determined according to a beam periodicity in the measurement configuration assistance information.

In the embodiment of the present disclosure, the measurement configuration assistance information may include the beam periodicity of the beam. The beam is sent by the second space-borne base station, and includes an SSB signal.

In the embodiment of the present disclosure, the first space-borne base station determines the measurement periodicity of the measurement window according to the beam periodicity in the measurement configuration assistance information. For example, the beam periodicity can be taken as the measurement periodicity of the measurement window.

At step 407, a measurement window configuration is determined according to the window duration, the window offset and the measurement periodicity of the measurement window.

In the embodiment of the present disclosure, the first space-borne base station determines the measurement window configuration according to the window duration, the window offset and the measurement periodicity of the measurement window, which means that the measurement window configuration includes the window duration, the window offset and the measurement periodicity of the measurement window.

At step 408, the measurement window configuration is sent to a UE, in which the measurement window configuration is used for an RRM measurement on an SSB signal in a beam sent by the second space-borne base station.

Step 408 can be implemented in any of the embodiments of the present disclosure, which is not limited and will not be repeated here.

In the measurement configuration method of the embodiment of the present disclosure, the second space-borne base station provides the measurement configuration assistance information to the first space-borne base station serving the UE, so that the first space-borne base station can reasonably configure the measurement window through the SSB-MTC according to the time difference, the dwell time and the beam periodicity in the measurement configuration assistance information and the SFN offset between the first space-borne base station and the second space-borne base station, and obtain the measurement window configuration. Moreover, the first space-borne base station sends the measurement window configuration to the UE, and the UE performs the RRM measurement within the measurement window configured according to the measurement window configuration, which can solve a problem that the UE cannot receive the SSB signal in the beam sent by the second space-borne base station in a beam hopping scenario, improve the reliability of the RRM measurement, and improve the performance of the communication system.

The above embodiments are method embodiments performed by the first space-borne base station, and the present disclosure also provides a measurement configuration method performed by the second space-borne base station.

FIG. 5 is a schematic flowchart of another measurement configuration method provided by an embodiment of the present disclosure.

As illustrated in FIG. 5, the measurement configuration method is performed by a second space-borne base station, and includes the following steps.

At step 501, an enquiry request sent by a first space-borne base station adjacent to the second space-borne base station is received.

In the embodiment of the present disclosure, the first space-borne base station is a base station adjacent to the second space-borne base station. For example, a satellite where the first space-borne base station is located is adjacent to a satellite where the second space-borne base station is located.

In the embodiment of the present disclosure, the second space-borne base station receives the enquiry request sent by the first space-borne base station. The enquiry request is used for acquiring measurement configuration assistance information.

At step 502, in response to the enquiry request, the measurement configuration assistance information is obtained.

In the embodiment of the present disclosure, in response to the enquiry request, the second space-borne base station obtains the measurement configuration assistance information.

At step 503, an enquiry response carrying the measurement configuration assistance information is sent to the first space-borne base station.

The measurement configuration assistance information is used to determine a measurement window configuration. The measurement window configuration is sent to a UE, in which the measurement window configuration is used for an RRM measurement on an SSB signal in a beam sent by the second space-borne base station.

In the embodiment of the present disclosure, the second space-borne base station sends the enquiry response carrying the measurement configuration assistance information to the first space-borne base station. Correspondingly, the first space-borne base station receives the enquiry response, and configures a measurement window according to the measurement configuration assistance information in the enquiry response. The first space-borne base station also determines the measurement window configuration and sends the measurement window configuration to the UE. Correspondingly, the UE receives the measurement window configuration, and then performs the RRM measurement on the SSB signal in the beam sent by the second space-borne base station according to the measurement window configuration.

In the measurement configuration method provided by the embodiment of the present disclosure, the second space-borne base station receives the enquiry request sent by the adjacent first space-borne base station. In response to the enquiry request, the second space-borne base station obtains the measurement configuration assistance information, and sends the enquiry response carrying the measurement configuration assistance information to the first space-borne base station. The measurement configuration assistance information is used for determining the measurement window configuration. The first space-borne base station sends the measurement window configuration to the UE. The measurement window configuration is used for the RRM measurement on the SSB signal in the beam sent by the second space-borne base station. Therefore, the second space-borne base station provides the measurement configuration assistance information to the first space-borne base station serving the UE, to facilitate the first space-borne base station to reasonably configure the measurement window through the SSB-MTC and to obtain the measurement window configuration. Moreover, the first space-borne base station sends the measurement window configuration to the UE, so that the UE can perform the RRM measurement within the measurement window configured according to the measurement window configuration, which can solve a problem that the UE cannot receive the SSB signal in the beam sent by the second space-borne base station in a beam hopping scenario, improve the reliability of the RRM measurement, and improve the performance of the communication system.

FIG. 6 is a schematic flowchart of another measurement configuration method provided by an embodiment of the present disclosure.

As illustrated in FIG. 6, the measurement configuration method is performed by a second space-borne base station, and includes the following steps.

At step 601, an enquiry request sent by a first space-borne base station adjacent to the second space-borne base station is received.

Step 601 can be implemented in any of the embodiments of the present disclosure, which is not limited and will not be repeated here.

In any embodiment of the present disclosure, the enquiry request includes at least one of the two following items:

(1) location information (LocationInfo) used to indicate a location of the UE; or

As an example, the location information may include longitude information (ueLongitude) and latitude information (ueLatitude) of the location of the UE.

(2) grid information (GridInfo) used to indicate a grid where the UE is located.

As an example, the grid information includes latitude information of a first boundary and longitude information of a second boundary of the grid where the UE is located, and the first boundary is adjacent to the second boundary.

For example, if the first boundary includes a top and a bottom of the grid where the UE is located, and the second boundary includes a left boundary and a right boundary of the grid where the UE is located, the grid information includes latitude information of the top (topLatitude), latitude information of the bottom (bottomLatitude), longitude information of the left boundary (leftLongitude) and longitude information of the right boundary (rightLongitude) of the grid where the UE is located.

It should be noted that in an actual satellite communication system, there may be many UEs in an overlapped coverage area of two adjacent space-borne base stations. If the first space-borne base station sends location information of these UEs to the second space-borne base station, it will cause a large signaling overhead.

In order to reduce the signaling overhead between the space-borne base stations, the grid information can be used to identify the locations of the UEs. The ground area is divided into a plurality of grids, and each grid includes a plurality of UEs. After determining the location information of each UE, the first space-borne base station determines a grid where each UE is located according to the location information of the UE, and sends the grid information of all the UEs to the second space-borne base station.

That is, in order to reduce the signaling overhead between the space-borne base stations, in any embodiment of the present disclosure, the grid information may indicate a grid in which a plurality of UEs are located, i.e., the plurality of UEs are in the same grid. That is, the enquiry request sent by the first space-borne base station to the second space-borne base station includes the grid information of the same grid in which the plurality of UEs are located, which indicates that the plurality of UEs are in the same grid.

In conclusion, for all the UEs in the same grid, the first space-borne base station only needs to send one piece of grid information, without having to send the location information of each UE, which can reduce the signaling overhead.

At step 602, location information of center points of a plurality of beam positions in a beam position scanning sequence are obtained.

It should be noted that the beam positions can be divided according to the coverage of the space-borne base station, and they move as the space-borne base station moves. Therefore, the location of the center point of the beam position, the coverage of the space-borne base station and the location of the space-borne base station maintain a fixed relationship. The space-borne base station can calculate the three-dimensional coordinates of the center point of each beam position within its coverage according to its azimuth and deviation angles, and can also determine the location information (including longitude information and latitude information) of the center point of each beam position.

In the embodiment of the present disclosure, the second space-borne base station obtains the location information of the center points of the plurality of beam positions in the beam position scanning sequence. The location information includes longitude information and latitude information of the center point of the beam position.

At step 603, a beam position where the UE is located is determined among the plurality of beam positions according to the location information of the center points of the plurality of beam positions and the enquiry request.

In an embodiment of the present disclosure, the second space-borne base station determines the beam position where the UE is located among the plurality of beam positions according to the location information of the center points of the plurality of beam positions and the enquiry request.

In a possible implementation of the embodiment of the present disclosure, when the enquiry request includes the location information (including longitude information and latitude information) of the UE, the second space-borne base station can calculate the distances between the UE and the center points of the plurality of beam positions in the beam position scanning sequence according to the location information of the UE and the location information (including longitude information and latitude information) of the center points of the plurality of beam positions in the beam position scanning sequence. Therefore, in the present disclosure, the second space-borne base station can determine the beam position where the UE is located among the plurality of beam positions according to the distances between the UE and the center points of the plurality of beam positions.

As an example, for any beam position among the plurality of beam positions, it is determined whether a distance between the UE and a center point of the any beam position of the plurality of beam positions is less than a beam position radius of the any beam position. If the distance between the UE and the center point of the any beam position is less than the beam position radius of the any beam position, it is determined that the any beam position is the beam position where the UE is located. If the distance between the UE and the center point of the any beam position is greater than or equal to the beam position radius of the any beam position, it is determined that the any beam position is not the beam position where the UE is located.

That is, in the present disclosure, the distance between the center point of the beam position where the UE is located and the UE is less than the beam position radius of the beam position.

In another possible implementation of the embodiment of the present disclosure, when the enquiry request includes the grid information, the second space-borne base station determines location information (including longitude information and latitude information) of a grid center of the grid where the UE is located according to the grid information, and then determines distances between the grid center and the center points of the plurality of beam positions according to the location information of the grid center and the location information (including longitude information and latitude information) of the center points of the plurality of beam positions. Therefore, in the present disclosure, the second space-borne base station can determine the beam position where the UE is located among the plurality of beam positions according to the distances between the grid center and the center points of the plurality of beam positions.

As an example, as the shortest distance from any beam position to the grid center, the distance between the center point of the beam position where the UE is located and the grid center is less than a distance between a center point of another beam position of the plurality of beam positions other than the beam position where the UE is located and the grid center.

At step 604, a second time is determined according to the beam position where the UE is located, the beam position scanning sequence and a dwell time of a beam.

In the embodiment of the present disclosure, the second time is a time when the beam arrives at the beam position where the UE is located. The beam is sent by the second space-borne base station, and includes an SSB signal.

In the embodiment of the present disclosure, the second space-borne base station may determine the place (i.e., sequence number) of the beam position where the UE is located in the scanning sequence within a beam periodicity according to the beam position where the UE is located and the beam position scanning sequence, and may also determine the time when the beam arrives at the beam position where the UE is located according to the place in the scanning sequence and the dwell time of the beam, i.e., the second time in the present disclosure.

At step 605, a first time is obtained, and measurement configuration assistance information is generated according to a time difference between the first time and the second time, the dwell time of the beam and the beam periodicity of the beam.

In the embodiment of the present disclosure, the first time is a time when the beam arrives at a first beam position in the beam position scanning sequence.

In the embodiment of the present disclosure, the second space-borne base station can determine the time when the beam arrives at the first beam position in the beam position scanning sequence, i.e., the first time in the present disclosure, and generate the measurement configuration assistance information according to the time difference between the first time and the second time, the dwell time of the beam and the beam periodicity of the beam.

At step 606, an enquiry response carrying the measurement configuration assistance information is sent to the first space-borne base station.

The measurement configuration assistance information is used to determine a measurement window configuration. The measurement window configuration is sent to a UE, in which the measurement window configuration is used for an RRM measurement on an SSB signal in a beam sent by the second space-borne base station.

Step 606 can be implemented in any of the embodiments of the present disclosure, which is not limited and will not be repeated here.

In the measurement configuration method of the embodiment of the present disclosure, the second space-borne base station sends the measurement configuration assistance information to the first space-borne base station serving the UE. The measurement configuration assistance information includes at least one of the time difference between the first time and the second time, the dwell time of the beam or the beam periodicity of the beam. The first space-borne base station can reasonably configure the measurement window through the SSB-MTC according to the time difference, the dwell time of the beam and the beam periodicity of the beam, and obtain the measurement window configuration. Moreover, the first space-borne base station sends the measurement window configuration to the UE, so that the UE can perform the RRM measurement within the measurement window configured according to the measurement window configuration, which can solve a problem that the UE cannot receive the SSB signal in the beam sent by the second space-borne base station in a beam hopping scenario, improve the reliability of the RRM measurement, and improve the performance of the communication system.

The above embodiments are method embodiments performed by the first space-borne base station and the second space-borne base station, and the present disclosure also provides a measurement configuration method performed by a UE.

FIG. 7 is a schematic flowchart of another measurement configuration method provided by an embodiment of the present disclosure.

As illustrated in FIG. 7, the measurement configuration method is performed by a UE, and includes the following steps.

At step 701, a measurement window configuration sent by a first space-borne base station is received, in which the measurement window configuration is determined according to measurement configuration assistance information sent by a second space-borne base station adjacent to the first space-borne base station.

In the embodiment of the present disclosure, the first space-borne base station sends an enquiry request to the second space-borne base station. The enquiry request is used to obtain the measurement configuration assistance information. Correspondingly, the second space-borne base station receives the enquiry request, and then it obtains the measurement configuration assistance information in response to the enquiry request, and sends an enquiry response carrying the measurement configuration assistance information to the first space-borne base station. Correspondingly, the first space-borne base station receives the enquiry response, determines the measurement window configuration according to the measurement configuration assistance information in the enquiry response, and sends the measurement window configuration to the UE. Correspondingly, the UE receives the measurement window configuration sent by the first space-borne base station.

At step 702, a measurement result is obtained by performing an RRM measurement on an SSB signal in a beam sent by the second space-borne base station according to the measurement window configuration.

In the embodiment of the present disclosure, after receiving the measurement window configuration, the UE obtains the measurement result by performing the RRM measurement on the SSB signal in the beam sent by the second space-borne base station according to the measurement window configuration.

In any embodiment of the present disclosure, the measurement configuration assistance information includes: a time difference between a first time and a second time; a dwell time of the beam; and a beam periodicity of the beam.

The first time is a time when the beam arrives at a first beam position in a beam position scanning sequence, and the second time is a time when the beam arrives at the beam position where the UE is located.

In any embodiment of the present disclosure, the measurement window configuration includes a window duration, a window offset and a measurement periodicity of the measurement window. The window duration is determined according to an SFN offset between the first space-borne base station and the second space-borne base station and the time difference. The window offset is determined according to the SFN offset and the dwell time. The measurement periodicity is determined according to the beam periodicity.

In any embodiment of the present disclosure, the UE may send the measurement result to the first space-borne base station. For example, the UE may send the measurement result to the first space-borne base station through a measurement report.

It should be noted that the descriptions of the measurement configuration methods performed by the first space-borne base station and the second space-borne base station in the above embodiments are also applicable to the measurement configuration method performed by the UE in the embodiment, and their implementation principles are similar, which will not be repeated here.

In the measurement configuration method of the embodiment of the present disclosure, the second space-borne base station receives the measurement window configuration sent by the first space-borne base station. The measurement window configuration is determined according to the measurement configuration assistance information sent by the second space-borne base station adjacent to the first space-borne base station. According to the measurement window configuration, the UE performs the RRM measurement on the SSB signal in the beam sent by the second space-borne base station and obtains the measurement result. The second space-borne base station sends the measurement configuration assistance information to the first space-borne base station serving the UE, so that the first space-borne base station can reasonably configure the measurement window through the SSB-MTC and obtain the measurement window configuration. Moreover, the first space-borne base station sends the measurement window configuration to the UE, so that the UE can perform the RRM measurement within the measurement window configured according to the measurement window configuration, which can solve a problem that the UE cannot receive the SSB signal in the beam sent by the second space-borne base station in a beam hopping scenario, improve the reliability of the RRM measurement, and improve the performance of the communication system.

In any embodiment of the present disclosure, in a beam-hopping satellite system, the space-borne base station in the adjacent satellite (i.e., the second space-borne base station) provides the measurement configuration assistance information to the space-borne base station in the serving satellite (i.e., the first space-borne base station) to assist the first space-borne base station in reasonably configuring the measurement window through the SSB-MTC for neighboring cells.

In detail, before performing the RRM measurement, the first space-borne base station sends the enquiry request (which may also be referred to as a measurement configuration assistance information enquiry request) to the second space-borne base station, and the second space-borne base station sends the enquiry response (which may also be referred to as a measurement configuration assistance information enquiry response) carrying the measurement configuration assistance information to the first space-borne base station. The first space-borne base station configures the measurement window according to the measurement configuration assistance information, obtains the measurement window configuration and sends the measurement window configuration to the UE, so that the UE can perform the RRM measurement on the SSB signal in the beam sent by the second space-borne base station according to the measurement window configuration.

The enquiry request includes the location information (LocationInfo) of the UE and/or the grid information (GridInfo) of the UE. The location information (LocationInfo) includes the longitude information (ueLongitude) and the latitude information (ueLatitude) of the UE, and the grid information of the UE includes the latitude information of the top (topLatitude), the latitude information of the bottom (bottomLatitude), the longitude information of the left boundary (leftLongitude) and the longitude information of the right boundary (rightLongitude) of the grid where the UE is located.

The enquiry response includes the measurement configuration assistance information. The measurement configuration assistance information includes a time difference (arriveTime) between a time when the beam sent by the second space-borne base station arrives at a first beam position in a beam position scanning sequence and a time when the beam arrives at a beam position where the UE is located, a dwell time of the beam and a beam periodicity.

As an example, in a beam hopping scenario, the RRM measurement procedure is shown in FIG. 8.

In order to accurately know the exact time when the beam sent by the second space-borne base station arrives at the beam position where the UE is located, the second space-borne base station needs to know the beam position where the UE is located. Firstly, it needs to know the location information of each beam position. The beam positions can be divided according to the coverage of the space-borne base station, and they move as the space-borne base station moves. Therefore, the location of the center point of the beam position, the coverage of the space-borne base station and the location of the space-borne base station maintain a fixed relationship. Under the condition that the space-borne base station has already determined azimuth and deviation angles of the center points of all beam positions within its coverage, the space-borne base station can calculate the three-dimensional coordinates of the center point of each beam position according to its azimuth and deviation angles, respectively, and determine the longitude and latitude of the center point of the beam position.

The first space-borne base station provides the location information of the UE to the second space-borne base station, so that the second space-borne base station can calculate the distance between the UE and the center point of each beam position. If a distance between a center point of a beam position and the UE is less than or equal to a beam position radius of the beam position, it is determined that the UE is located at the beam position. After determining the beam position where the UE is located, a place (i.e., sequence number) of the beam position where the UE is located in the beam position scanning sequence within the beam periodicity can be determined in combination with the beam position scanning sequence. Moreover, the time when the beam arrives at the beam position where the UE is located can be obtained in combination with the dwell time of the beam, and the time difference between the time when the beam arrives at the first beam position in the beam position scanning sequence and the time when the beam arrives at the beam position where the UE is located can also be determined. The first space-borne base station obtains the time difference, the beam periodicity and the dwell time of the beam sent by the second space-borne base station from the second space-borne base station, and then configures the measurement window for the neighboring cell of the UE in combination with the SFN offset between the first space-borne base station and the second space-borne base station and obtains the measurement window configuration.

As an example, the window duration, the window offset and the measurement periodicity of the measurement window in the measurement window configuration are as shown in FIG. 9.

It should be noted that in an actual communication system, there may be many UEs in an overlapped coverage area of two adjacent space-borne base stations. If the first space-borne base station sends location information of these UEs to the second space-borne base station, it will cause a large signaling overhead. In order to solve this problem, the grid information can be used to identify the locations of the UEs. The ground area is divided into a plurality of grids, and each grid includes a plurality of UEs. After determining the location information of each UE, the first space-borne base station determines a grid where each UE is located according to the location information of the UE, and sends the grid information of all the UEs to the second space-borne base station. The grid information includes the latitude information of the top, the latitude information of the bottom, the longitude information of the left boundary and the longitude information of the right boundary of the grid.

The second space-borne base station can determine the longitude and latitude information of the grid centers according to the grid information, and determine the beam position where the UE is located according to the longitude and latitude information of the grid centers and the longitude and latitude information of the center point of each beam position. After determining the beam position where the UE is located, the second space-borne base station can determine the measurement configuration assistance information in combination with the beam position scanning sequence.

With this method, the first space-borne base station only needs to send one piece of grid information for all UEs in the same grid, without having to send the location information of each UE, thereby reducing the signaling overhead.

The RRM measurement procedure in the beam-hopping scenario will be described in detail with specific embodiments in the following.

Embodiment 1: a first space-borne base station provides location information of a UE to a second space-borne base station.

The first space-borne base station provides the location information of the UE to the second space-borne base station, and then obtains measurement configuration assistance information from the second space-borne base station to assist in measurement configuration, which specifically includes the following steps.

(1) The first space-borne base station sends an enquiry request to the second space-borne base station, in which the enquiry request includes location information of the UE.

(2) After receiving the enquiry request, the second space-borne base station first determines a sequence number of a beam position where the UE is located according to the location information of the UE, and then determines a time when a beam sent by it arrives at the beam position where the UE is located in combination with the beam position scanning sequence (or beam scanning sequence). The second space-borne base station also determines a time difference *a* between a time when the beam arrives at a first beam position in the beam position scanning sequence and the time when the beam arrives at the beam position where the UE is located, and sends a combination of the time difference *a,* a dwell time *b* and a beam periodicity c of the beam to the first space-borne base station as the measurement configuration assistance information, so that the first space-borne base station can calculate a measurement window configuration according to the above parameters.

(3) The first space-borne base station configures a measurement window for a neighboring cell according to the received measurement configuration assistance information. The procedure includes: assuming that x represents an SFN offset between a neighboring cell and a serving cell (i.e., an SFN offset between the second space-borne base station and the first space-borne base station), c represents a measurement periodicity, a window duration of the measurement window is *b+x-floor(x).* In a first RRM measurement, a window offset of the measurement window is *a*+floor(*x*), and in a subsequent RRM measurement, the window offset is: *a*+floor (*x*)- *x.* Examples are provided as follows.

As illustrated in FIG. 10, assuming that the SFN offset of the neighboring cell relative to the serving cell is 1.5 sub-frames, the beam position scanning sequence is from beam position 1 to beam position 6, the beam periodicity c configured for the neighboring cell is 6 sub-frames, the time difference *a* is 3 sub-frames, and *b* is 1 sub-frame, the measurement periodicity configured by the first space-borne base station for the neighboring cell is 6 sub-frames. The window duration of the measurement window is 1.5 sub-frames, and a window offset of the first RRM measurement is 3+1=4 sub-frames, and the window offset of the subsequent RRM measurement is 2.5 sub-frames.

The shadow area in FIG. 10 refers to the beam position where the UE is located.

(4) The first space-borne base station sends the measurement window configuration to the UE through RRCReconfiguration.

(5) The UE performs an RRM measurement according to the measurement window configuration.

(6) The UE sends a measurement result.

Embodiment 2: a first space-borne base station provides grid information of a grid where a UE is located to a second space-borne base station.

When there are many UEs in an overlapped coverage area of two adjacent space-borne base stations, the first space-borne base station provides the grid information of the grid where the UE is located to the second space-borne base station, and then the second space-borne base station provides measurement configuration assistance information to the first space-borne base station. The procedure is provided below.

(1) The first space-borne base station calculates the grid where the UE is located according to location information of the UE.

(2) The first space-borne base station sends an enquiry request to the second space-borne base station, in which the enquiry request includes the grid information (GridInfo) of the grid where the UE is located. The grid information includes the latitude information of the top (topLatitude), the latitude information of the bottom (bottomLatitude), the longitude information of the left boundary (leftLongitude) and the longitude information of the right boundary (rightLongitude) of the grid where the UE is located.

(3) The second space-borne base station calculates a beam position where the UE is located according to the grid information, determines a time difference between a time when a beam sent by it arrives at a first beam position in a beam position scanning sequence and a time when the beam arrives at the beam position where the UE is located, and sends the time difference, a dwell time and a beam periodicity of the beam to the first space-borne base station as the measurement configuration assistance information, as in Embodiment 1.

(4) After receiving the measurement configuration assistance information, the first space-borne base station configures a measurement window of the UE according to the measurement configuration assistance information and obtains a measurement window configuration.

(5) The first space-borne base station sends the measurement window configuration to the UE.

(6) The UE performs an RRM measurement and sends a measurement result.

In conclusion, in order to solve the problem that a space-borne base station in a serving satellite in a beam-hopping satellite system cannot accurately configure a measurement window for its neighboring cell, in the present disclosure, the space-borne base station (i.e., the first space-borne base station) in the serving satellite can reasonably configure the measurement window according to the measurement configuration assistance information, so that the UE can perform the RRM measurement within the configured measurement window, which can avoid the problem of not receiving SSB signals from neighboring cells, thereby improving the performance of the communication system.

The technical solution provided by the embodiments of the present disclosure may be applicable to various systems, in particular to 5G system. Examples of the applicable systems include a global system of mobile communication (GSM) system, a code division multiple access (CDMA) system, a wideband code division multiple access (WCDMA) general packet radio service (GPRS) system, an LTE system, an LTE frequency division duplex (FDD) system, an LTE time division duplex (TDD) system, a LTE-advanced (LTE-A) system, an universal mobile telecommunication system (UMTS), a worldwide interoperability for microwave access (WiMAX) system, and a 5G NR system. Each of these system includes a UE and a network device. The system may also include a core network portion, such as an evolved packet system (EPS), a 5G system (5GS), and so on.

In order to implement the above embodiments, the present disclosure also proposes a first space-borne base station.

FIG. 11 is a schematic structural diagram of a first space-borne base station provided by an embodiment of the present disclosure.

As illustrated in FIG. 11, the first space-borne base station includes: a transceiver 1100, a processor 1110 and a memory 1120.

The memory 1120 is configured to store a computer program. The transceiver 1100 is configured to transmit and receive data under the control of the processor 1110. The processor 1110 is configured to read the computer program in the memory 1120 and perform the following operations: sending an enquiry request for acquiring measurement configuration assistance information to a second space-borne base station adjacent to the first space-borne base station; receiving an enquiry response sent by the second space-borne base station in response to the enquiry request, in which the enquiry response carries the measurement configuration assistance information; determining a measurement window configuration according to the measurement configuration assistance information; and sending the measurement window configuration to a UE, in which the measurement window configuration is used for an RRM measurement on an SSB signal in a beam sent by the second space-borne base station.

The transceiver 1100 is used to receive and transmit data under the control of the processor 1110.

In FIG. 11, the bus architecture may include any number of interconnected buses and bridges, specifically various circuits used for connecting one or more processors represented by the processor 1110 and memory resources represented by the memory 1120. The bus architecture may also include circuits used to connect, for example, peripheral devices and voltage regulators and other power management circuits, which are all well known in the art and, therefore, will not be described further herein. The bus interface provides an interface. The transceiver 1100 may include a plurality of components, including a transmitter and a receiver, for providing units that can communicate with various other devices over a transmission medium, such as a wireless channel, a wired channel, an optical cable, or the like. The processor 1110 is responsible for managing the bus architecture and general processing, and the memory 1120 is configured to store data used by the processor 1110 when performing operations.

The processor 1110 may be a central processing unit (CPU), an application specific integrated circuit (ASIC), a field-programmable gate array (FPGA) or a complex programmable logic device (CPLD). The processor 1310 can also adopt a multi-core architecture.

In a possible implementation of the present disclosure, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

In a possible implementation of the present disclosure, the grid information is used to indicate a grid where a plurality of UEs are located, and the plurality of UEs are located in the same grid.

In a possible implementation of the present disclosure, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

In a possible implementation of the present disclosure, when determining the measurement window configuration according to the measurement configuration assistance information, the processor 1110 is configured to: obtain an SFN offset between the first space-borne base station and the second space-borne base station; and configure a measurement window according to the measurement configuration assistance information and the SFN offset, and determine the measurement window configuration.

In a possible implementation of the present disclosure, the measurement window configuration includes a window duration, a window offset and a measurement periodicity of the measurement window. When determining configuring the measurement window according to the measurement configuration assistance information and the SFN offset, and determining the measurement window configuration, the processor 1110 is configured to: determine the window offset of the measurement window according to the time difference in the measurement configuration assistance information and the SFN offset; determine the window duration of the measurement window according to the dwell time in the measurement configuration assistance information and the SFN offset; and determine the measurement periodicity of the measurement window according to the beam periodicity in the measurement configuration assistance information.

In a possible implementation of the present disclosure, the RRM measurement includes at least one measurement, and the window offset includes a window offset corresponding to the at least one RRM measurement. When determining the window offset of the measurement window according to the time difference in the measurement configuration assistance information and the SFN offset, the processor 1110 is further configured to: obtain a first offset by rounding the SFN offset; determine a window offset corresponding to a first RRM measurement in the at least one RRM measurement according to a sum of the first offset and the time difference; and determine a window offset corresponding to an RRM measurement other than the first RRM measurement in the at least one RRM measurement according to a difference between the window offset corresponding to the first RRM measurement and the SFN offset.

In a possible implementation of the present disclosure, when determining the window duration of the measurement window according to the dwell time in the measurement configuration assistance information and the SFN offset, the processor 1110 is further configured to: determine a second offset according to a sum of the dwell time and the SFN offset; obtain a first offset by rounding the SFN offset; and determine the window duration of the measurement window according to a difference between the second offset and the first offset.

In a possible implementation of the present disclosure, when sending the measurement window configuration to the UE, the processor 1110 is further configured to: send an RRC reconfiguration message to the UE, in which the RRC reconfiguration message carries the measurement window configuration.

In a possible implementation of the present disclosure, the processor 1110 is further configured to: receive a measurement result sent by the UE, in which the measurement result is obtained by the UE through performing the RRM measurement on the SSB signal.

It should be noted that the first space-borne base station provided by the embodiment of the present disclosure can implement all the steps of the methods provided by the method embodiments in FIG. 2- FIG. 4 and achieve the same technical effects, so the same contents and beneficial effects as in the method embodiments will not be repeated here.

In order to implement the above embodiments, the present disclosure also proposes a second space-borne base station.

FIG. 12 is a schematic structural diagram of a second space-borne base station provided by an embodiment of the present disclosure.

As illustrated in FIG. 12, the second space-borne base station includes: a transceiver 1200, a processor 1210 and a memory 1220.

The memory 1220 is configured to store a computer program. The transceiver 1200 is configured to transmit and receive data under the control of the processor 1210. The processor 1210 is configured to read the computer program in the memory 1220 and perform the following operations: receiving an enquiry request sent by a first space-borne base station adjacent to the second space-borne base station; in response to the enquiry request, obtaining measurement configuration assistance information; sending an enquiry response carrying the measurement configuration assistance information to the first space-borne base station; in which the measurement configuration assistance information is used to determine a measurement window configuration, the measurement window configuration is sent to a UE, and the measurement window configuration is used for an RRM measurement on an SSB signal in a beam sent by the second space-borne base station.

The transceiver 1200 is configured to receive and transmit data under the control of the processor 1210.

In FIG. 12, the bus architecture may include any number of interconnected buses and bridges, specifically various circuits used for connecting one or more processors represented by the processor 1210 and memory resources represented by the memory 1220. The bus architecture may also include circuits used to connect, for example, peripheral devices and voltage regulators and other power management circuits, which are all well known in the art and, therefore, will not be described further herein. The bus interface provides an interface.

The transceiver 1200 may include a plurality of components, including a transmitter and a receiver, for providing units that can communicate with various other devices over a transmission medium, such as a wireless channel, a wired channel, an optical cable, or the like. The processor 1210 is responsible for managing the bus architecture and general processing, and the memory 1220 is configured to store data used by the processor 1210 when performing operations.

The processor 1210 may be a CPU, an ASIC, an FPGA or a CPLD. The processor 1210 can also adopt a multi-core architecture.

In a possible implementation of the present disclosure, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

In a possible implementation of the present disclosure, the grid information is used to indicate a grid where a plurality of UEs are located, and the plurality of UEs are located in the same grid.

In a possible implementation of the present disclosure, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

In a possible implementation of the present disclosure, when obtaining the measurement configuration assistance information in response to the enquiry request, the processor 1210 is configured to: obtain location information of center points of a plurality of beam positions in the beam position scanning sequence; determine the beam position where the UE is located among the plurality of beam positions according to the location information of the center points of the plurality of beam positions and the enquiry request; determine the second time according to the beam position where the UE is located, the beam position scanning sequence and the dwell time of the beam; and obtain the first time, and generate the measurement configuration assistance information according to the time difference between the first time and the second time, the dwell time of the beam and the beam periodicity of the beam.

In a possible implementation of the present disclosure, when determining the beam position where the UE is located among the plurality of beam positions according to the location information of the center points of the plurality of beam positions and the enquiry request, the processor 1210 is configured to: when the enquiry request includes the location information of the UE, determine distances between the UE and the center points of the plurality of beam positions according to the location information of the UE and the location information of the center points of the plurality of beam positions; and determine the beam position where the UE is located among the plurality of beam positions according to the distances between the UE and the center points of the plurality of beam positions.

In a possible implementation of the present disclosure, when determining the beam position where the UE is located among the plurality of beam positions according to the distances between the UE and the center points of the plurality of beam positions, the processor 1210 is configured to: determine whether a distance between the UE and a center point of any beam position of the plurality of beam positions is less than a beam position radius of the any beam position; when the distance between the UE and the center point of the any beam position is less than the beam position radius of the any beam position, determine that the any beam position is the beam position where the UE is located; and when the distance between the UE and the center point of the any beam position is greater than or equal to the beam position radius of the any beam position, determine that the any beam position is not the beam position where the UE is located.

In a possible implementation of the present disclosure, when determining the beam position where the UE is located among the plurality of beam positions according to the location information of the center points of the plurality of beam positions and the enquiry request, the processor 1210 is configured to: when the enquiry request includes the grid information, determine location information of a grid center of the grid where the UE is located according to the grid information; determine distances between the grid center and the center points of the plurality of beam positions according to the location information of the grid center and the location information of the center points of the plurality of beam positions; and determine the beam position where the UE is located among the plurality of beam positions according to the distances between the grid center and the center points of the plurality of beam positions.

In a possible implementation of the present disclosure, a distance between a center point of the beam position where the UE is located and the grid center is less than a distance between a center point of any beam position of the plurality of beam positions other than the beam position where the UE is located and the grid center.

It should be noted that the second space-borne base station provided by the embodiment of the present disclosure can implement all the steps of the methods provided by the method embodiments in FIG. 5- FIG. 6 and achieve the same technical effects, so the same contents and beneficial effects as in the method embodiments will not be repeated here.

In order to implement the above embodiments, the present disclosure also provides a UE.

FIG. 13 is a schematic structural diagram of a UE provided by an embodiment of the present disclosure.

As illustrated in FIG. 13, the UE includes: a transceiver 1300, a processor 1310, a memory 1320 and a user interface 1330.

The memory 1320 is configured to store a computer program. The transceiver 1300 is configured to transmit and receive data under the control of the processor 1310. The processor 1310 is configured to read the computer program in the memory 1320 and perform the following operations: receiving a measurement window configuration sent by a first space-borne base station, in which the measurement window configuration is determined according to measurement configuration assistance information sent by a second space-borne base station adjacent to the first space-borne base station; and obtaining a measurement result by performing an RRM measurement on an SSB signal in a beam sent by the second space-borne base station according to the measurement window configuration.

The transceiver 1300 is configured to receive and transmit data under the control of the processor 1310.

In FIG. 13, the bus architecture may include any number of interconnected buses and bridges, specifically various circuits used for connecting one or more processors represented by the processor 1310 and memory resources represented by the memory 1320. The bus architecture may also include circuits used to connect, for example, peripheral devices and voltage regulators and other power management circuits, which are all well known in the art and, therefore, will not be described further herein. The bus interface provides an interface. The transceiver 1300 may include a plurality of components, including a transmitter and a receiver, for providing units that can communicate with various other devices over a transmission medium, such as a wireless channel, a wired channel, an optical cable, or the like. For different UEs, the user interface 1330 may include various interfaces capable of connecting to external or internal devices as required, and the connected devices include, but are not limited to, a keypad, a display, a speaker, a microphone, a joystick, and the like.

The processor 1310 is responsible for managing the bus architecture and general processing, and the memory 1320 is used to store data used by the processor 1310 when performing operations.

Optionally, the processor 1310 may be a CPU, an ASIC, an FPGA or a CPLD. The processor 1210 can also adopt a multi-core architecture.

The processor 1310 is used to call the computer program stored in the memory and execute the method in FIG. 7 provided by the embodiment of the present disclosure according to the obtained executable instructions. The processor 1310 and the memory 1320 may be physically separated.

In a possible implementation of the present disclosure, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

In a possible implementation of the present disclosure, the measurement window configuration includes a window duration, a window offset and a measurement periodicity of the measurement window. The window duration is determined according to an SFN offset between the first space-borne base station and the second space-borne base station and the time difference. The window offset is determined according to the SFN offset and the dwell time. The measurement periodicity is determined according to the beam periodicity.

In a possible implementation of the present disclosure, the processor 1310 is further configured to: send the measurement result to the first space-borne base station.

It should be noted that the UE provided by the embodiment of the present disclosure can implement all the steps of the method provided by the method embodiment in FIG. 7 and achieve the same technical effects, so the same contents and beneficial effects as in the method embodiment will not be repeated here.

Corresponding to the measurement configuration method provided in the above embodiments of FIG. 2- FIG. 4, the present disclosure also provides a measurement configuration apparatus. Since the measurement configuration apparatus provided by the embodiment of the present disclosure corresponds to the measurement configuration method provided in the above embodiments of FIG. 2- FIG. 4, the implementations of the measurement configuration method are also applicable to the measurement configuration apparatus provided by the embodiment of the present disclosure, which will not be described in detail in the embodiment of the present disclosure.

FIG. 14 is a schematic structural diagram of a measurement configuration apparatus provided by an embodiment of the present disclosure.

As illustrated in FIG. 14, the measurement configuration apparatus 1400 is applied to a first space-borne base station, and includes: a sending module 1410, a receiving module 1420 and a determining module 1430.

The sending module 1410 is configured to send an enquiry request for acquiring measurement configuration assistance information to a second space-borne base station adjacent to the first space-borne base station.

The receiving module 1420 is configured to receive an enquiry response sent by the second space-borne base station in response to the enquiry request, in which the enquiry response carries the measurement configuration assistance information.

The determining module 1430 is configured to determine a measurement window configuration according to the measurement configuration assistance information.

The sending module 1410 is further configured to send the measurement window configuration to a UE, in which the measurement window configuration is used for an RRM measurement on an SSB signal in a beam sent by the second space-borne base station.

In a possible implementation of the present disclosure, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

In a possible implementation of the present disclosure, the grid information is used to indicate a grid where a plurality of UEs are located, and the plurality of UEs are located in the same grid.

In a possible implementation of the present disclosure, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

In a possible implementation of the present disclosure, the determining module 1430 is further configured to: obtain an SFN offset between the first space-borne base station and the second space-borne base station; and configure a measurement window according to the measurement configuration assistance information and the SFN offset, and determine the measurement window configuration.

In a possible implementation of the present disclosure, the measurement window configuration includes a window duration, a window offset and a measurement periodicity of the measurement window. The determining module 1430 is further configured to: determine the window offset of the measurement window according to the time difference in the measurement configuration assistance information and the SFN offset; determine the window duration of the measurement window according to the dwell time in the measurement configuration assistance information and the SFN offset; and determine the measurement periodicity of the measurement window according to the beam periodicity in the measurement configuration assistance information.

In a possible implementation of the present disclosure, the RRM measurement includes at least one measurement, and the window offset includes a window offset corresponding to the at least one RRM measurement. The determining module 1430 is further configured to: obtain a first offset by rounding the SFN offset; determine a window offset corresponding to a first RRM measurement in the at least one RRM measurement according to a sum of the first offset and the time difference; and determine a window offset corresponding to an RRM measurement other than the first RRM measurement in the at least one RRM measurement according to a difference between the window offset corresponding to the first RRM measurement and the SFN offset.

In a possible implementation of the present disclosure, the determining module 1430 is further configured to: determine a second offset according to a sum of the dwell time and the SFN offset; obtain a first offset by rounding the SFN offset; and determine the window duration of the measurement window according to a difference between the second offset and the first offset.

In a possible implementation of the present disclosure, the sending module 1410 is further configured to: send an RRC reconfiguration message to the UE, in which the RRC reconfiguration message carries the measurement window configuration.

In a possible implementation of the present disclosure, the receiving module 1420 is further configured to: receive a measurement result sent by the UE, in which the measurement result is obtained by the UE through performing the RRM measurement on the SSB signal.

It should be noted that the measurement configuration apparatus provided by the embodiment of the present disclosure can implement all the steps of the methods provided by the method embodiments in FIG. 3-FIG. 4 and achieve the same technical effects, so the same contents and beneficial effects as in the method embodiments will not be repeated here.

Corresponding to the measurement configuration method provided in the above embodiments of FIG. 5- FIG. 6, the present disclosure also provides a measurement configuration apparatus. Since the measurement configuration apparatus provided by the embodiment of the present disclosure corresponds to the measurement configuration method provided in the above embodiments of FIG. 5- FIG. 6, the implementations of the measurement configuration method are also applicable to the measurement configuration apparatus provided by the embodiment of the present disclosure, which will not be described in detail in the embodiment of the present disclosure.

FIG. 15 is a schematic structural diagram of another measurement configuration apparatus provided by an embodiment of the present disclosure.

As illustrated in FIG. 15, the measurement configuration apparatus 1500 is applied to a second space-borne base station, and includes: a receiving module 1510, an obtaining module 1520 and a sending module 1530.

The receiving module 1510 is configured to receive an enquiry request sent by a first space-borne base station adjacent to the second space-borne base station.

The obtaining module 1520 is configured to, in response to the enquiry request, obtain measurement configuration assistance information.

The sending module 1530 is configured to send an enquiry response carrying the measurement configuration assistance information to the first space-borne base station.

The measurement configuration assistance information is used to determine a measurement window configuration, the measurement window configuration is sent to a UE, and the measurement window configuration is used for an RRM measurement on an SSB signal in a beam sent by the second space-borne base station.

In a possible implementation of the present disclosure, the enquiry request includes at least one of: location information used to indicate a location of the UE; or grid information used to indicate a grid where the UE is located; in which the location information includes longitude information and latitude information of the location of the UE, the grid information includes latitude information of a first boundary and longitude information of a second boundary of the grid where the UE is located, and the first boundary is adjacent to the second boundary.

In a possible implementation of the present disclosure, the grid information is used to indicate a grid where a plurality of UEs are located, and the plurality of UEs are located in the same grid.

In a possible implementation of the present disclosure, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

In a possible implementation of the present disclosure, the obtaining module 1520 is further configured to: obtain location information of center points of a plurality of beam positions in the beam position scanning sequence; determine the beam position where the UE is located among the plurality of beam positions according to the location information of the center points of the plurality of beam positions and the enquiry request; determine the second time according to the beam position where the UE is located, the beam position scanning sequence and the dwell time of the beam; and obtain the first time, and generate the measurement configuration assistance information according to the time difference between the first time and the second time, the dwell time of the beam and the beam periodicity of the beam.

In a possible implementation of the present disclosure, the obtaining module 1520 is further configured to: when the enquiry request includes the location information of the UE, determine distances between the UE and the center points of the plurality of beam positions according to the location information of the UE and the location information of the center points of the plurality of beam positions; and determine the beam position where the UE is located among the plurality of beam positions according to the distances between the UE and the center points of the plurality of beam positions.

In a possible implementation of the present disclosure, the obtaining module 1520 is further configured to: determine whether a distance between the UE and a center point of any beam position of the plurality of beam positions is less than a beam position radius of the any beam position; when the distance between the UE and the center point of the any beam position is less than the beam position radius of the any beam position, determine that the any beam position is the beam position where the UE is located; and when the distance between the UE and the center point of the any beam position is greater than or equal to the beam position radius of the any beam position, determine that the any beam position is not the beam position where the UE is located.

In a possible implementation of the present disclosure, the obtaining module 1520 is further configured to: when the enquiry request includes the grid information, determine location information of a grid center of the grid where the UE is located according to the grid information; determine distances between the grid center and the center points of the plurality of beam positions according to the location information of the grid center and the location information of the center points of the plurality of beam positions; and determine the beam position where the UE is located among the plurality of beam positions according to the distances between the grid center and the center points of the plurality of beam positions.

In a possible implementation of the present disclosure, a distance between a center point of the beam position where the UE is located and the grid center is less than a distance between a center point of any beam position of the plurality of beam positions other than the beam position where the UE is located and the grid center.

It should be noted that the measurement configuration apparatus provided by the embodiment of the present disclosure can implement all the steps of the methods provided by the method embodiments in FIG. 5-FIG. 6 and achieve the same technical effects, so the same contents and beneficial effects as in the method embodiments will not be repeated here.

Corresponding to the measurement configuration method provided in the embodiment of FIG. 7, the present disclosure also provides a measurement configuration apparatus. Since the measurement configuration apparatus provided by the embodiment of the present disclosure corresponds to the measurement configuration method provided in the embodiment of FIG. 7, the implementations of the measurement configuration method are also applicable to the measurement configuration apparatus provided by the embodiment of the present disclosure, which will not be described in detail in the embodiment of the present disclosure.

FIG. 16 is a schematic structural diagram of a measurement configuration apparatus 1600 provided by an embodiment of the present disclosure.

As illustrated in FIG. 16, the measurement configuration apparatus 1600 is applied to a UE, and includes: a receiving module 1610 and a measurement module 1620.

The receiving module 1610 is configured to receive a measurement window configuration sent by a first space-borne base station, in which the measurement window configuration is determined according to measurement configuration assistance information sent by a second space-borne base station adjacent to the first space-borne base station.

The measurement module 1620 is configured to obtain a measurement result by performing an RRM measurement on an SSB signal in a beam sent by the second space-borne base station according to the measurement window configuration.

In a possible implementation of the present disclosure, the measurement configuration assistance information includes: a time difference between a first time and a second time, in which the first time is a time when the beam arrives at a first beam position in a beam position scanning sequence, and the second time is a time when the beam arrives at a beam position where the UE is located; a dwell time of the beam; and a beam periodicity of the beam.

In a possible implementation of the present disclosure, the measurement window configuration includes a window duration, a window offset and a measurement periodicity of the measurement window. The window duration is determined according to an SFN offset between the first space-borne base station and the second space-borne base station and the time difference. The window offset is determined according to the SFN offset and the dwell time. The measurement periodicity is determined according to the beam periodicity.

In a possible implementation of the present disclosure, the measurement configuration apparatus 1600 further includes:

a sending module, configured to send the measurement result to the first space-borne base station.

It should be noted that the measurement configuration apparatus provided by the embodiment of the present disclosure can implement all the steps of the method provided by the method embodiment in FIG. 7 and achieve the same technical effects, so the same contents and beneficial effects as in the method embodiment will not be repeated here.

It should be noted that individual functional modules in the embodiments of the present disclosure may be integrated in one processing module or may be separately physically present, or two or more modules may be integrated in one module. The integrated module as described above may be implemented in the form of hardware or in the form of a software functional module.

If the integrated module is implemented in the form of a software functional module and sold or used as an independent product, it can be stored in a processor-readable storage medium. Based on this understanding, the essence of the technical solution of the present disclosure or the part that contributes to related arts or all or part of the technical solution can be embodied in the form of a software product. The computer software product is stored in a storage medium and includes several instructions for enabling a computer device (e.g., a personal computer, a server, or a network device) or a processor to execute all or part of the steps of the embodiments of the present disclosure. The storage medium may be a U disk, a mobile hard disk, a read-only memory (ROM), a random access memory (RAM), a magnetic disk or an optical disk, for storing program codes.

In order to implement the above embodiments, the present disclosure also provides a processor-readable storage medium.

The processor-readable storage medium stores a computer program for causing a processor to perform the measurement configuration method of any one of the embodiments of FIG. 2- FIG. 4 of the present disclosure.

The processor-readable storage medium may be any available medium that can be accessed by the processor or data storage device, including but not limited to a magnetic memory (such as a floppy disk, a hard disk, a magnetic tape, a magneto-optical (MO) disk, etc.), an optical memory (such as a compact disc (CD), a digital versatile disc (DVD), a Blu-ray disc (BD) and a high-definition versatile disc (HVD), etc.), and a semiconductor memory (such as a ROM, an erasable programmable read-only memory (EPROM), an electrically erasable programmable read-only memory (EEPROM), a non-volatile memory (NAND FLASH) and a solid state disk (SSD), etc.).

In order to implement the above embodiments, the present disclosure also provides another processor-readable storage medium.

The processor-readable storage medium stores a computer program, and the computer program is used for causing a processor to execute the measurement configuration method of any one of the embodiments of FIG. 5- FIG. 6 of the present disclosure.

The processor-readable storage medium may be any available medium that can be accessed by the processor or data storage device, including but not limited to a magnetic memory (such as a floppy disk, a hard disk, a magnetic tape, a MO disk, etc.), an optical memory (such as a CD, a DVD, a BD and a HVD, etc.), and a semiconductor memory (such as a ROM, an EPROM, an EEPROM, a non-volatile memory (NAND FLASH) and a SSD, etc.).

In order to implement the above embodiments, the present disclosure also provides yet another processor-readable storage medium.

The processor-readable storage medium stores a computer program, and the computer program is used for causing a processor to execute the measurement configuration method of the embodiment of FIG. 7 of the present disclosure.

The processor-readable storage medium may be any available medium that can be accessed by the processor or data storage device, including but not limited to a magnetic memory (such as a floppy disk, a hard disk, a magnetic tape, a MO disk, etc.), an optical memory (such as a CD, a DVD, a BD and a HVD, etc.), and a semiconductor memory (such as a ROM, an EPROM, an EEPROM, a non-volatile memory (NAND FLASH) and a SSD, etc.).

The present disclosure also provides a computer program product. The computer program product includes a computer program, and when the computer program are executed by a processor, the measurement configuration method described in any of the above embodiments of the present disclosure is implemented.

The present disclosure also provides a communication device. The communication device includes: a processor and a memory for storing instructions executable by the processor. The processor is configured to implement the measurement configuration method described in any of the above embodiments of the present disclosure.

It should be understood by those skilled in the art that the embodiments of the present disclosure may be provided as a method, a system or a computer program product. Therefore, the present disclosure may take the form of an entire hardware embodiment, an entire software embodiment, or a combination of hardware embodiments and hardware embodiments. Moreover, the present disclosure may take the form of a computer program product embodied on one or more computer-usable storage medium (including but not limited to a magnetic disk memory and an optical memory, etc.) containing computer usable program codes therein.

The present disclosure is described with reference to flowcharts and/or block diagrams of methods, apparatus (systems) and computer program products according to the embodiments of the present disclosure. It should be understood that each process and/or block in the flowcharts and/or block diagrams, or combinations of processes and/or boxes in the flowcharts and/or block diagrams, can be implemented by computer-executable instructions. These computer-executable instructions can be provided to a processor of a general-purpose computer, a dedicated computer, an embedded processor or a programmable data processing device to produce a machine, so that the instructions executed by the processor of the computer or the programmable data processing device can produce an apparatus for implementing the functions specified in one or more processes in the flowchart and/or one or more boxes in the block diagram.

These processor-executable instructions may also be stored in a processor-readable memory that can direct a computer or other programmable data processing devices to operate in a specific manner, so that instructions stored in the processor-readable memory can produce a product containing an instruction device used for implementing the functions specified in one or more processes in the flowchart and/or one or more boxes in the block diagram.

These processor-executable instructions may also be loaded onto a computer or other programmable data processing devices, so that a series of operational steps can be executed on the computer or other programmable devices to produce a computer-implemented process. The instructions executed on the computer or programmable devices provide steps for implementing the functions specified in one or more processes in the flowchart and/or one or more boxes in the block diagram.

Obviously, various changes and modifications made by those skilled in the art to the present disclosure are within the spirit and scope of the present disclosure. Since these changes and modifications to the present disclosure fall within the scope of the claims of the present disclosure and their equivalents, the present disclosure is intended to include these changes and modifications.

## Claims

1. A measurement configuration method, performed by a first space-borne base station, comprising:

    sending an enquiry request for acquiring measurement configuration assistance information to a second space-borne base station adjacent to the first space-borne base station;
    receiving an enquiry response sent by the second space-borne base station in response to the enquiry request, wherein the enquiry response carries the measurement configuration assistance information;
    determining a measurement window configuration according to the measurement configuration assistance information; and
    sending the measurement window configuration to a user equipment (UE), wherein the measurement window configuration is used for a radio resource management (RRM) measurement of a synchronization signal and physical broadcast channel (PBCH) block (SSB) signal in a beam sent by the second space-borne base station.

2. The method of claim 1, wherein the enquiry request comprises at least one of:

location information used to indicate a location of the UE; or
grid information used to indicate a grid where the UE is located;
wherein the location information comprises longitude information and latitude information of the location of the UE, the grid information comprises latitude information of a first boundary and longitude information of a second boundary of the grid where the UE is located, and the first boundary is adjacent to the second boundary.

3. The method of claim 2, wherein the grid information is used to indicate a grid where a plurality of UEs are located, and the plurality of UEs are located in a same grid.

4. The method of any one of claims 1-3, wherein the measurement configuration assistance information comprises:

a time difference between a first time and a second time, wherein the first time is a time when the beam arrives at a first beam position in a beam position scanning sequence, and the second time is a time when the beam arrives at a beam position where the UE is located;
a dwell time of the beam; and
a beam periodicity of the beam.

5. The method of any one of claims **1-4,** wherein determining the measurement window configuration according to the measurement configuration assistance information comprises:

obtaining a system frame number (SFN) offset between the first space-borne base station and the second space-borne base station; and
configuring a measurement window according to the measurement configuration assistance information and the SFN offset, and determining the measurement window configuration.

6. The method of claim 5, wherein the measurement window configuration comprises a window duration, a window offset and a measurement periodicity of the measurement window;
configuring the measurement window according to the measurement configuration assistance information and the SFN offset, and determining the measurement window configuration, comprises:

determining the window offset of the measurement window according to the time difference in the measurement configuration assistance information and the SFN offset;
determining the window duration of the measurement window according to the dwell time in the measurement configuration assistance information and the SFN offset; and
determining the measurement period of the measurement window according to the beam period in the measurement configuration assistance information.

7. The method of claim 6, wherein the RRM measurement comprises at least one measurement, and the window offset comprises a window offset corresponding to the at least one RRM measurement; and determining the window offset of the measurement window according to the time difference in the measurement configuration assistance information and the SFN offset comprises:

obtaining a first offset by rounding the SFN offset;
determining a window offset corresponding to a first RRM measurement in the at least one RRM measurement according to a sum of the first offset and the time difference; and
determining a window offset corresponding to an RRM measurement other than the first RRM measurement in the at least one RRM measurement according to a difference between the window offset corresponding to the first RRM measurement and the SFN offset.

8. The method of claim 6, wherein determining the window duration of the measurement window according to the dwell time in the measurement configuration assistance information and the SFN offset comprises:

determining a second offset according to a sum of the dwell time and the SFN offset;
obtaining a first offset by rounding the SFN offset; and
determining the window duration of the measurement window according to a difference between the second offset and the first offset.

9. The method of any one of claims 1-8, wherein sending the measurement window configuration to the UE comprises:
sending a radio resource control (RRC) reconfiguration message to the UE, wherein the RRC reconfiguration message carries the measurement window configuration.

10. The method of any one of claims 1-9, further comprising:
receiving a measurement result sent by the UE, wherein the measurement result is obtained by the UE by performing the RRM measurement on the SSB signal.

**11.** A measurement configuration method, performed by a second space-borne base station, comprising:

receiving an enquiry request sent by a first space-borne base station adjacent to the second space-borne base station;
in response to the enquiry request, obtaining measurement configuration assistance information;
sending an enquiry response carrying the measurement configuration assistance information to the first space-borne base station;
wherein the measurement configuration assistance information is used to determine a measurement window configuration, and the measurement window configuration is used for a radio resource management (RRM) measurement of a synchronization signal and physical broadcast channel (PBCH) block (SSB) signal in a beam sent by the second space-borne base station.

**12.** The method of claim 11, wherein the enquiry request comprises at least one of:

location information used to indicate a location of a user equipment (UE); or
grid information used to indicate a grid where the UE is located;
wherein the location information comprises longitude information and latitude information of the location of the UE;
the grid information comprises latitude information of a first boundary and longitude information of a second boundary of the grid where the UE is located, and the first boundary is adjacent to the second boundary.

**13.** The method of claim 12, wherein the grid information is used to indicate a grid where a plurality of UEs are located, and the plurality of UEs are located in a same grid.

**14.** The method of any one of claims 11-13, wherein the measurement configuration assistance information comprises:

a time difference between a first time and a second time, wherein the first time is a time when the beam arrives at a first beam position in a beam position scanning sequence, and the second time is a time when the beam arrives at a beam position where the UE is located;
a dwell time of the beam; and
a beam period of the beam.

**15.** The method of claim 14, wherein in response to the enquiry request, obtaining the measurement configuration assistance information, comprises:

obtaining location information of center points of a plurality of beam positions in the beam position scanning sequence;
determining the beam position where the UE is located among the plurality of beam positions according to the location information of the center points of the plurality of beam positions and the enquiry request;
determining the second time according to the beam position where the UE is located, the beam position scanning sequence and the dwell time of the beam; and
obtaining the first time, and generating the measurement configuration assistance information according to the time difference between the first time and the second time, the dwell time of the beam and the beam period of the beam.

**16.** The method of claim 15, wherein determining the beam position where the UE is located among the plurality of beam positions according to the location information of the center points of the plurality of beam positions and the enquiry request comprises:

in a case the enquiry request comprises the location information of the UE, determining distances between the UE and the center points of the plurality of beam positions according to the location information of the UE and the location information of the center points of the plurality of beam positions; and
determining the beam position where the UE is located among the plurality of beam positions according to the distances between the UE and the center points of the plurality of beam positions.

**17.** The method of claim 16, wherein determining the beam position where the UE is located among the plurality of beam positions according to the distances between the UE and the center points of the plurality of beam positions comprises:

determining whether a distance between the UE and a center point of any beam position of the plurality of beam positions is less than a beam position radius of the any beam position;
when the distance between the UE and the center point of the any beam position is less than the beam position radius of the any beam position, determining that the any beam position is the beam position where the UE is located; and

when the distance between the UE and the center point of the any beam position is greater than or equal to the beam position radius of the any beam position, determining that the any beam position is not the beam position where the UE is located.

**18.** The method of claim 15, wherein determining the beam position where the UE is located among the plurality of beam positions according to the location information of the center points of the plurality of beam positions and the enquiry request comprises:

in a case that the enquiry request comprises the grid information, determining location information of a grid center of the grid where the UE is located according to the grid information;

determining distances between the grid center and the center points of the plurality of beam positions according to the location information of the grid center and the location information of the center points of the plurality of beam positions; and

determining the beam position where the UE is located among the plurality of beam positions according to the distances between the grid center and the center points of the plurality of beam positions.

**19.** The method of claim 18, wherein a distance between a center point of the beam position where the UE is located and the grid center is less than a distance between a center point of any beam position of the plurality of beam positions other than the beam position where the UE is located and the grid center.

**20.** A measurement configuration method, performed by a user equipment (UE), comprising:

receiving a measurement window configuration sent by a first space-borne base station, wherein the measurement window configuration is determined according to measurement configuration assistance information sent by a second space-borne base station adjacent to the first space-borne base station; and

obtaining a measurement result by performing a radio resource management (RRM) measurement on a synchronization signal and physical broadcast channel (PBCH) block (SSB) signal in a beam sent by the second space-borne base station according to the measurement window configuration.

**21.** The method of claim 20, wherein the measurement configuration assistance information, comprises:

a time difference between a first time and a second time, wherein the first time is a time when the beam arrives at a first beam position in a beam position scanning sequence, and the second time is a time when the beam arrives at a beam position where the UE is located;

a dwell time of the beam; and

a beam periodicity of the beam.

**22.** The method of claim 21, wherein the measurement window configuration comprises a window duration, a window offset and a measurement periodicity of the measurement window;

the window duration is determined according to a system frame number (SFN) offset between the first space-borne base station and the second space-borne base station and the time difference;

the window offset is determined according to the SFN offset and the dwell time; and

the measurement periodicity is determined according to the beam periodicity.

**23.** The method of any one of claims 20-22, further comprising:

sending the measurement result to the first space-borne base station.

**24.** A first space-borne base station, comprising a memory, a transceiver and a processor;

wherein the memory is configured to store a computer program; the transceiver is configured to transmit and receive data under the control of the processor; and the processor is configured to read the computer program in the memory and perform the following operations:

sending an enquiry request for acquiring measurement configuration assistance information to a second space-borne base station adjacent to the first space-borne base station;

receiving an enquiry response sent by the second space-borne base station in response to the enquiry request, wherein the enquiry response carries the measurement configuration assistance information;

determining a measurement window configuration according to the measurement configuration assistance information; and

sending the measurement window configuration to a user equipment (UE), wherein the measurement window configuration is used for a radio resource management (RRM) measurement of a synchronization signal and physical broadcast channel (PBCH) block (SSB) signal in a beam sent by the second space-borne base station.

**25.** The first space-borne base station of claim 24, wherein the enquiry request comprises at least one of:

location information used to indicate a location of the UE; or
grid information used to indicate a grid where the UE is located;
wherein the location information comprises longitude information and latitude information of the location of the UE,
the grid information comprises latitude information of a first boundary and longitude information of a second boundary of the grid where the UE is located, and the first boundary is adjacent to the second boundary.

**26.** The first space-borne base station of claim 25, wherein the grid information is used to indicate a grid where a plurality of UEs are located, and the plurality of UEs are located in a same grid.

**27.** The first space-borne base station of any one of claims 24-26, wherein the measurement configuration assistance information, comprises:

a time difference between a first time and a second time, wherein the first time is a time when the beam arrives at a first beam position in a beam position scanning sequence, and the second time is a time when the beam arrives at a beam position where the UE is located;
a dwell time of the beam; and
a beam periodicity of the beam.

**28.** The first space-borne base station of any one of claims 24-27, wherein the processor is configured to:

obtain a system frame number (SFN) offset between the first space-borne base station and the second space-borne base station; and
configure a measurement window according to the measurement configuration assistance information and the SFN offset, and determine the measurement window configuration.

**29.** The first space-borne base station of claim 28, wherein the measurement window configuration comprises a window duration, a window offset and a measurement periodicity of the measurement window;
the processor is configured to:

determine the window offset of the measurement window according to the time difference in the measurement configuration assistance information and the SFN offset;
determine the window duration of the measurement window according to the dwell time in the measurement configuration assistance information and the SFN offset; and
determine the measurement periodicity of the measurement window according to the beam periodicity in the measurement configuration assistance information.

**30.** The first space-borne base station of claim 29, wherein the RRM measurement comprises at least one measurement, and the window offset comprises a window offset corresponding to the at least one RRM measurement;
the processor is configured to:

obtain a first offset by rounding the SFN offset;
determine a window offset corresponding to a first RRM measurement in the at least one RRM measurement according to a sum of the first offset and the time difference; and
determine a window offset corresponding to an RRM measurement other than the first RRM measurement in the at least one RRM measurement according to a difference between the window offset corresponding to the first RRM measurement and the SFN offset.

**31.** The first space-borne base station of claim 29, wherein the processor is configured to:

determine a second offset according to a sum of the dwell time and the SFN offset;
obtain a first offset by rounding the SFN offset; and
determine the window duration of the measurement window according to a difference between the second offset and the first offset.

**32.** The first space-borne base station of any one of claims 24-31, wherein the processor is configured to: send a radio resource control (RRC) reconfiguration message to the UE, wherein the RRC reconfiguration message carries the measurement window configuration.

**33.** The first space-borne base station of any one of claims 24-32, wherein the processor is configured to: receive a measurement result sent by the UE, wherein the measurement result is obtained by the UE by performing the RRM measurement on the SSB signal.

**34.** A second space-borne base station, comprising a memory, a transceiver and a processor;
wherein the memory is configured to store a computer program; the transceiver is configured to transmit and receive data under the control of the processor; and the processor is configured to read the computer program in the memory and perform the following operations:

receiving an enquiry request sent by a first space-borne base station adjacent to the second space-borne base station;
in response to the enquiry request, obtaining measurement configuration assistance information;
sending an enquiry response carrying the measurement configuration assistance information to the first space-borne base station;
wherein the measurement configuration assistance information is used to determine a measurement window configuration, and the measurement window configuration is used for a radio resource management (RRM) measurement of a synchronization signal and physical broadcast channel (PBCH) block (SSB) signal in a beam sent by the second space-borne base station.

**35.** The second space-borne base station of claim 34, wherein the enquiry request comprises at least one of:

location information used to indicate a location of a user equipment (UE); or
grid information used to indicate a grid where the UE is located;
wherein the location information comprises longitude information and latitude information of the location of the UE;
the grid information comprises latitude information of a first boundary and longitude information of a second boundary of the grid where the UE is located, and the first boundary is adjacent to the second boundary.

**36.** The second space-borne base station of claim 35, wherein the grid information is used to indicate a grid where a plurality of UEs are located, and the plurality of UEs are located in a same grid.

**37.** The second space-borne base station of any one of claims 34-36, wherein the measurement configuration assistance information, comprises:

a time difference between a first time and a second time, wherein the first time is a time when the beam arrives at a first beam position in a beam position scanning sequence, and the second time is a time when the beam arrives at a beam position where the UE is located;
a dwell time of the beam; and
a beam periodicity of the beam.

**38.** The second space-borne base station of claim 37, wherein the processor is configured to:

obtain location information of center points of a plurality of beam positions in the beam position scanning sequence;
determine the beam position where the UE is located among the plurality of beam positions according to the location information of the center points of the plurality of beam positions and the enquiry request;
determine the second time according to the beam position where the UE is located, the beam position scanning sequence and the dwell time of the beam; and
obtain the first time, and generate the measurement configuration assistance information according to the time difference between the first time and the second time, the dwell time of the beam and the beam periodicity of the beam.

**39.** The second space-borne base station of claim 38, wherein the processor is configured to:

in a case that the enquiry request comprises the location information of the UE, determine distances between the UE and the center points of the plurality of beam positions according to the location information of the UE and the location information of the center points of the plurality of beam positions; and
determine the beam position where the UE is located among the plurality of beam positions according to the distances between the UE and the center points of the plurality of beam positions.

**40.** The second space-borne base station of claim 39, wherein the processor is configured to:

determine whether a distance between the UE and a center point of any beam position of the plurality of beam positions is less than a beam position radius of the any beam position;
in a case that the distance between the UE and the center point of the any beam position is less than the beam position radius of the any beam position, determine that the any beam position is the beam position where the UE is located; and
in a case that the distance between the UE and the center point of the any beam position is greater than or equal to the beam position radius of the any beam position, determine that the any beam position is not the beam position where the UE is located.

**41.** The second space-borne base station of claim 38, wherein the processor is configured to:

in a case that the enquiry request comprises the grid information, determine location information of a grid center of the grid where the UE is located according to the grid information;
determine distances between the grid center and the center points of the plurality of beam positions according to the location information of the grid center and the location information of the center points of the plurality of beam positions; and
determine the beam position where the UE is located among the plurality of beam positions according to the distances between the grid center and the center points of the plurality of beam positions.

**42.** The second space-borne base station of claim 41, wherein a distance between a center point of the beam position where the UE is located and the grid center is less than a distance between a center point of any beam position of the plurality of beam positions other than the beam position where the UE is located and the grid center.

**43.** A user equipment (UE), comprising a memory, a transceiver and a processor;
wherein the memory is configured to store a computer program; the transceiver is configured to transmit and receive data under the control of the processor; and the processor is configured to read the computer program in the memory and perform the following operations:

receiving a measurement window configuration sent by a first space-borne base station, wherein the measurement window configuration is determined according to measurement configuration assistance information sent by a second space-borne base station adjacent to the first space-borne base station; and
obtaining a measurement result by performing a radio resource management (RRM) measurement on a synchronization signal and physical broadcast channel (PBCH) block (SSB) signal in a beam sent by the second space-borne base station according to the measurement window configuration.

**44.** The UE of claim 43, wherein the measurement configuration assistance information, comprises:

a time difference between a first time and a second time, wherein the first time is a time when the beam arrives at a first beam position in a beam position scanning sequence, and the second time is a time when the beam arrives at a beam position where the UE is located;
a dwell time of the beam; and
a beam periodicity of the beam.

**45.** The UE of claim **44,** wherein the measurement window configuration comprises a window duration, a window offset and a measurement periodicity of the measurement window;

the window duration is determined according to a system frame number (SFN) offset between the first space-borne base station and the second space-borne base station and the time difference;
the window offset is determined according to the SFN offset and the dwell time; and
the measurement periodicity is determined according to the beam periodicity.

**46.** The UE of any one of claims 43-45, wherein the processor is further configured to:
send the measurement result to the first space-borne base station.

**47.** A measurement configuration apparatus, applied to a first space-borne base station, comprising:

a sending module, configured to send an enquiry request for acquiring measurement configuration assistance information to a second space-borne base station adjacent to the first space-borne base station;
a receiving module, configured to receive an enquiry response sent by the second space-borne base station in response to the enquiry request, wherein the enquiry response carries the measurement configuration assistance information;
a determining module, configured to determine a measurement window configuration according to the measurement configuration assistance information; and
the sending module, further configured to send the measurement window configuration to a user equipment (UE), wherein the measurement window configuration is used for a radio resource management (RRM) measurement of a synchronization signal and physical broadcast channel (PBCH) block (SSB) signal in a beam sent by the second space-borne base station.

**48.** A measurement configuration apparatus, applied to a second space-borne base station, comprising:

a receiving module, configured to receive an enquiry request sent by a first space-borne base station adjacent to the second space-borne base station;
an obtaining module, configured to, in response to the enquiry request, obtain measurement configuration assistance information;

a sending module, configured to send an enquiry response carrying the measurement configuration assistance information to the first space-borne base station;

wherein the measurement configuration assistance information is used to determine a measurement window configuration, and the measurement window configuration is used for a radio resource management (RRM) measurement of a synchronization signal and physical broadcast channel (PBCH) block (SSB) signal in a beam sent by the second space-borne base station.

**49.** A measurement configuration apparatus, applied to a user equipment (UE), comprising:

a receiving module, configured to receive a measurement window configuration sent by a first space-borne base station, wherein the measurement window configuration is determined according to measurement configuration assistance information sent by a second space-borne base station adjacent to the first space-borne base station; and

a measurement module, configured to obtain a measurement result by performing a radio resource management (RRM) measurement on a synchronization signal and physical broadcast channel (PBCH) block (SSB) signal in a beam sent by the second space-borne base station according to the measurement window configuration.

**50.** A processor-readable storage medium, wherein the processor-readable storage medium stores computer programs, and the computer programs are used to cause a processor to implement the method of any one of claims **1-10,** or the method of any one of claims **11-**19, or the method of any one of claims 20-23.

**51.** A communication device, comprising:

a processor; and

a memory configured to store instructions executable by the processor;

wherein the processor is configured to implement the measurement configuration method of any one of claims 1-23.

**52.** A computer program product comprising a computer program, wherein when the computer program is executed by a processor, the measurement configuration method of any one of claims 1-23 is implemented.

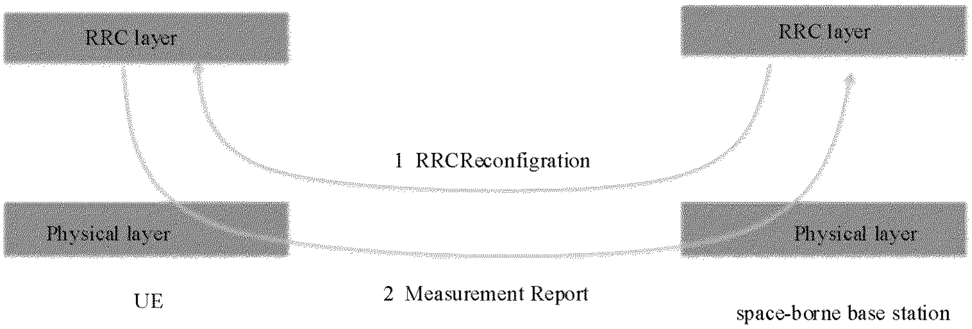


FIG. 1

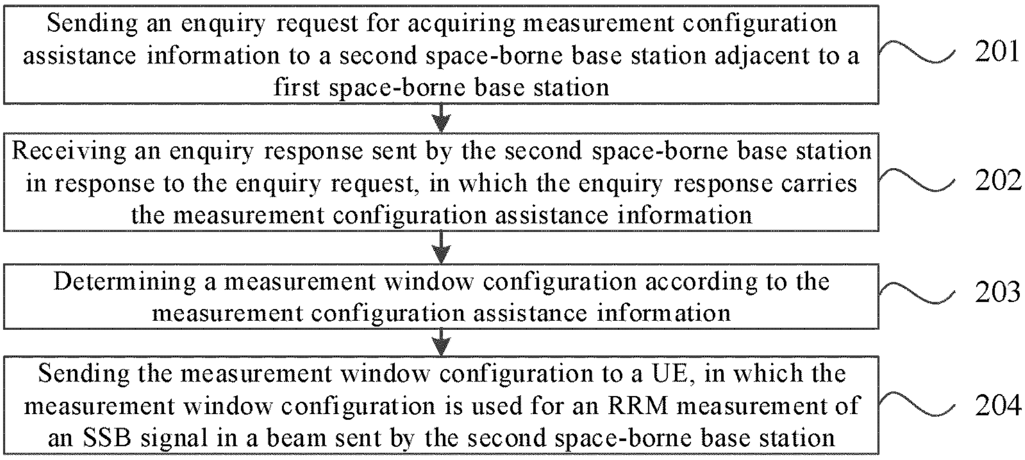


FIG. 2

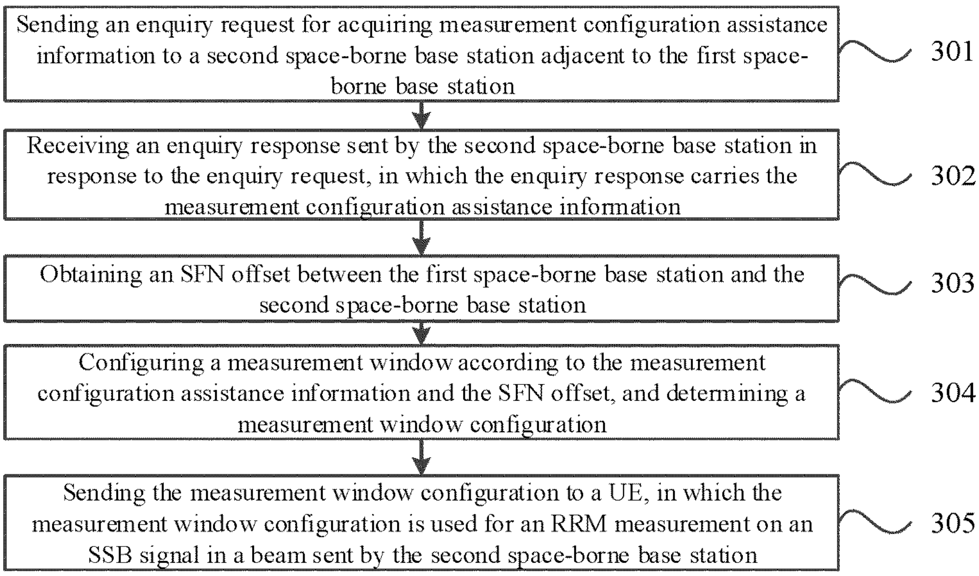


FIG. 3

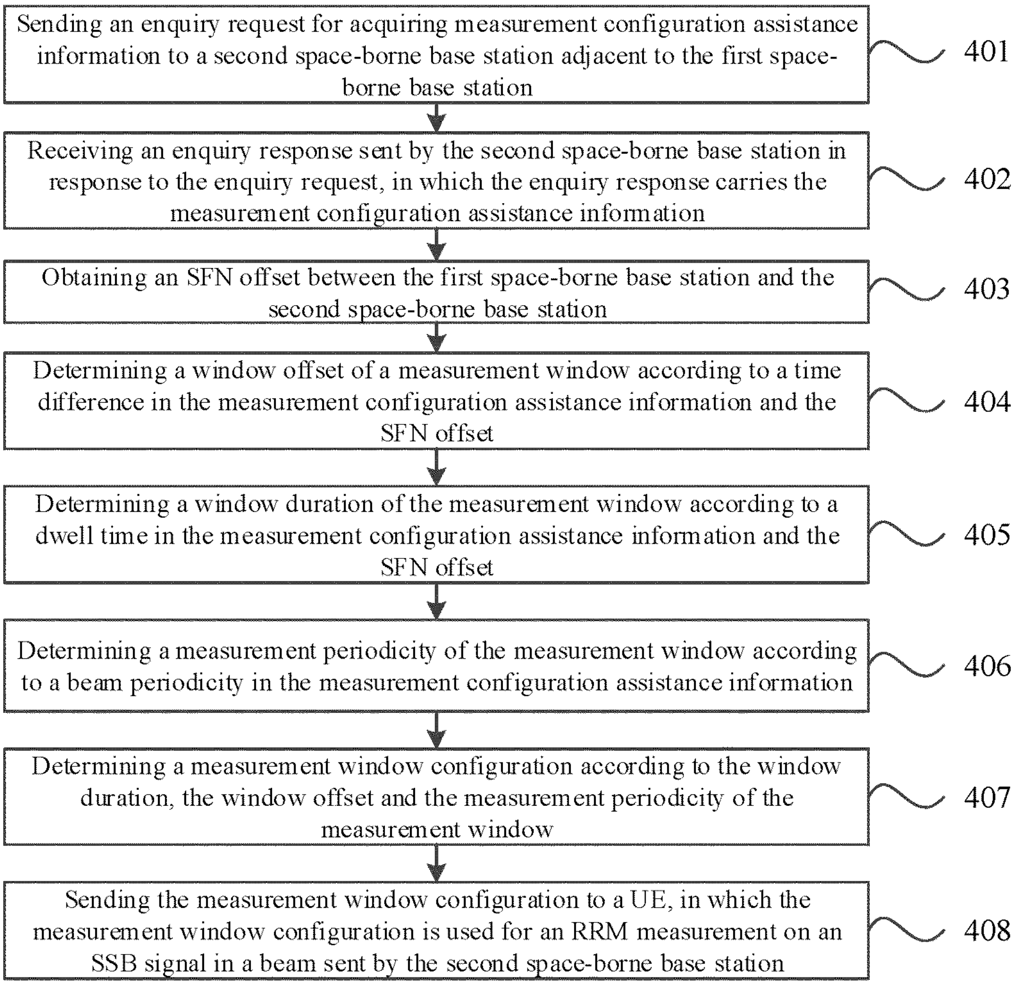
Sending an enquiry request for acquiring measurement configuration assistance information to a second space-borne base station adjacent to the first space-borne base station
401
Receiving an enquiry response sent by the second space-borne base station in response to the enquiry request, in which the enquiry response carries the measurement configuration assistance information
402
Obtaining an SFN offset between the first space-borne base station and the second space-borne base station
403
Determining a window offset of a measurement window according to a time difference in the measurement configuration assistance information and the SFN offset
404
Determining a window duration of the measurement window according to a dwell time in the measurement configuration assistance information and the SFN offset
405
Determining a measurement periodicity of the measurement window according to a beam periodicity in the measurement configuration assistance information
406
Determining a measurement window configuration according to the window duration, the window offset and the measurement periodicity of the measurement window
407
Sending the measurement window configuration to a UE, in which the measurement window configuration is used for an RRM measurement on an SSB signal in a beam sent by the second space-borne base station
408

FIG. 4

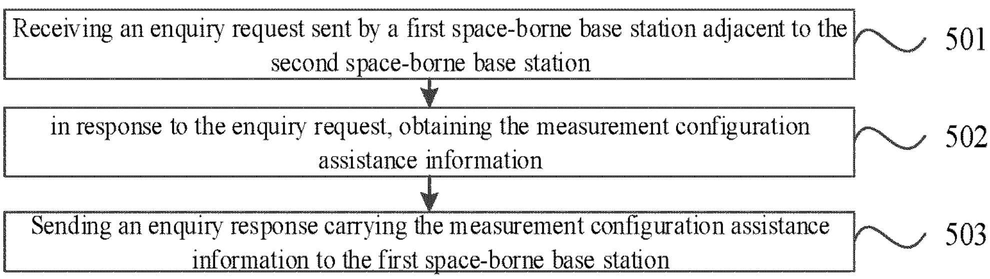
Receiving an enquiry request sent by a first space-borne base station adjacent to the second space-borne base station
501
in response to the enquiry request, obtaining the measurement configuration assistance information
502
Sending an enquiry response carrying the measurement configuration assistance information to the first space-borne base station
503

FIG. 5

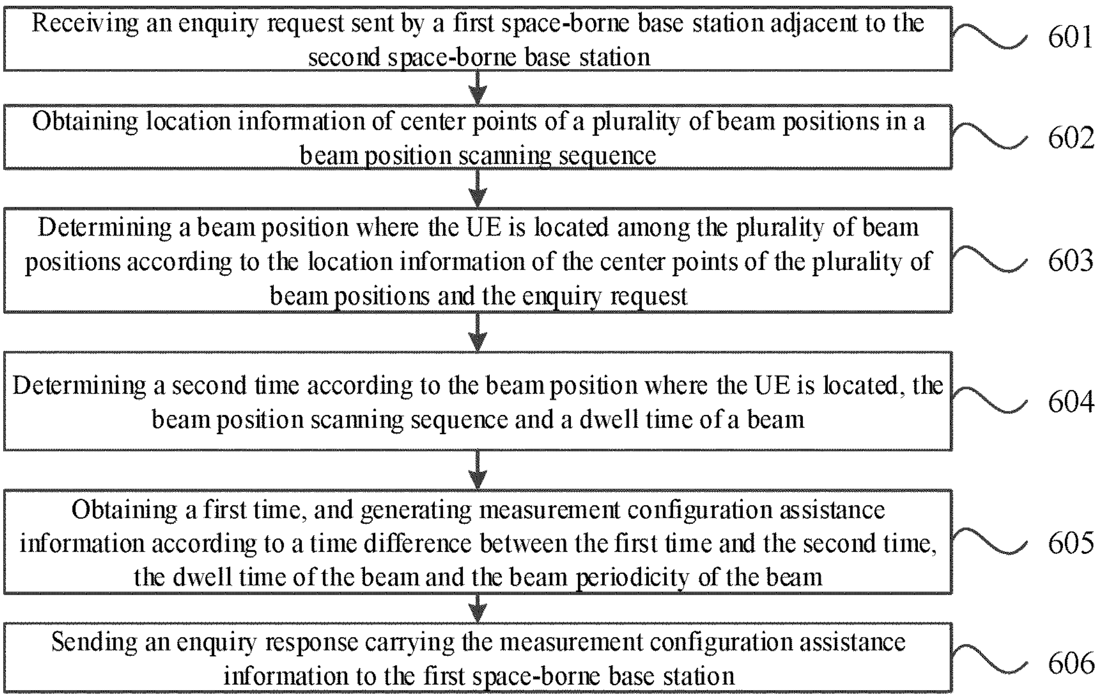
Receiving an enquiry request sent by a first space-borne base station adjacent to the second space-borne base station
601
Obtaining location information of center points of a plurality of beam positions in a beam position scanning sequence
602
Determining a beam position where the UE is located among the plurality of beam positions according to the location information of the center points of the plurality of beam positions and the enquiry request
603
Determining a second time according to the beam position where the UE is located, the beam position scanning sequence and a dwell time of a beam
604
Obtaining a first time, and generating measurement configuration assistance information according to a time difference between the first time and the second time, the dwell time of the beam and the beam periodicity of the beam
605
Sending an enquiry response carrying the measurement configuration assistance information to the first space-borne base station
606

FIG. 6

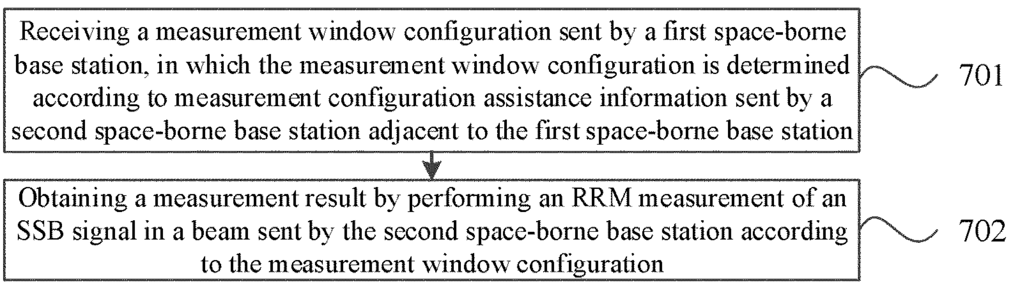
Receiving a measurement window configuration sent by a first space-borne base station, in which the measurement window configuration is determined according to measurement configuration assistance information sent by a second space-borne base station adjacent to the first space-borne base station
701
Obtaining a measurement result by performing an RRM measurement of an SSB signal in a beam sent by the second space-borne base station according to the measurement window configuration
702

FIG. 7

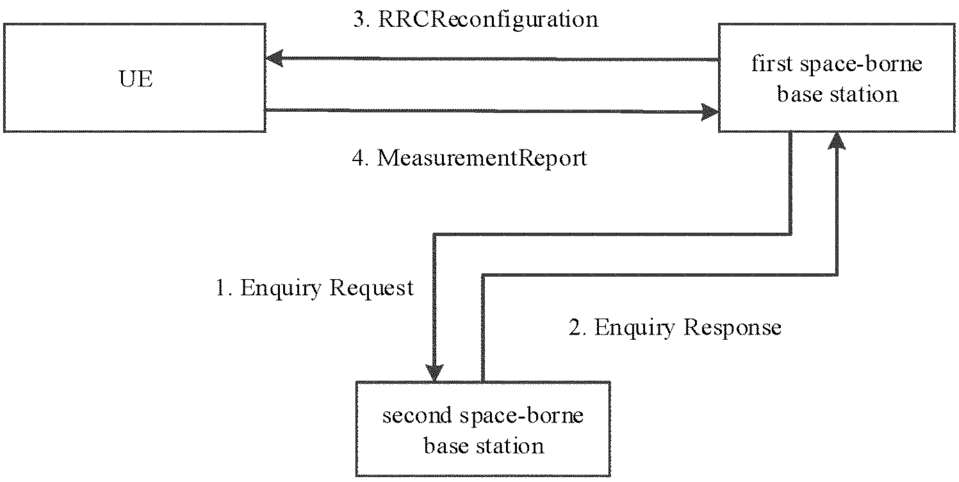


FIG. 8

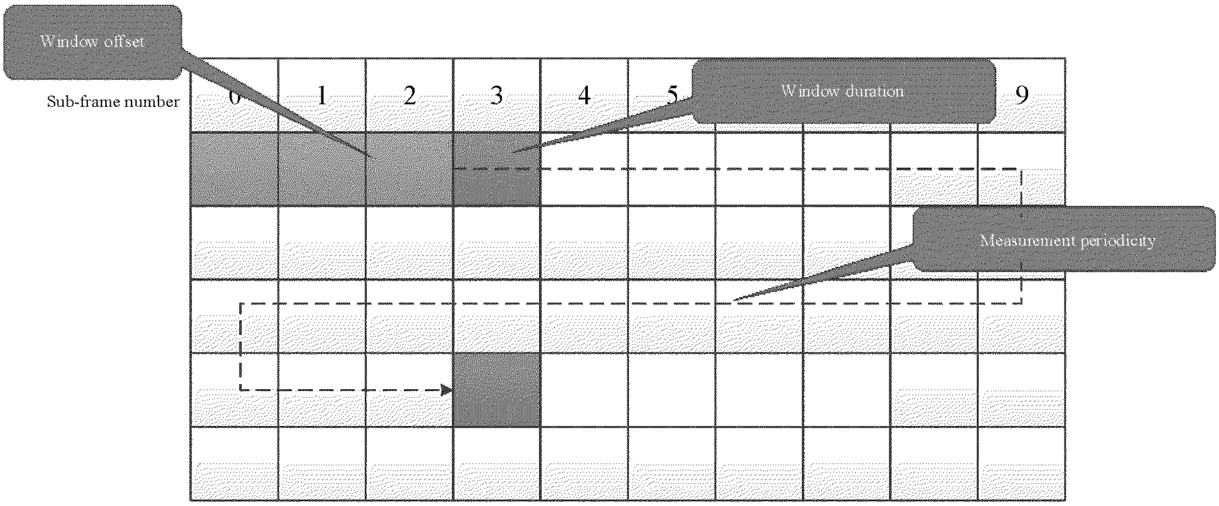


FIG. 9

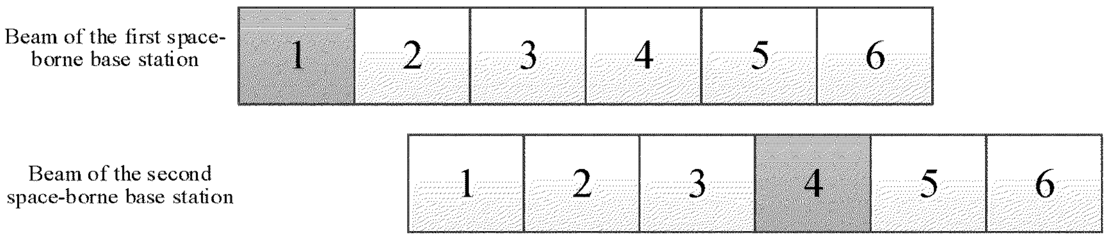


FIG. 10

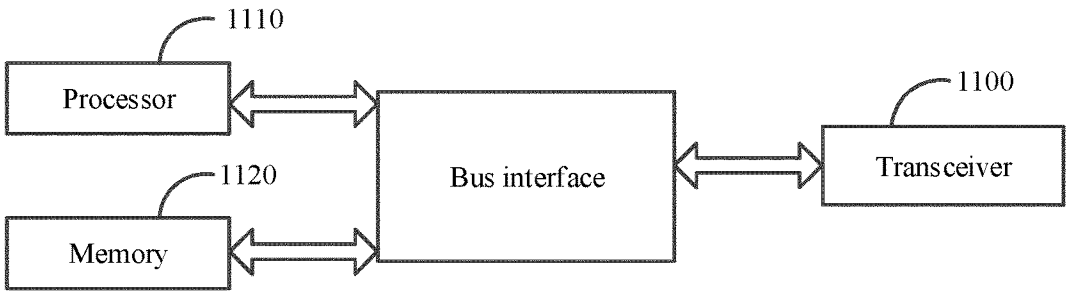


FIG. 11

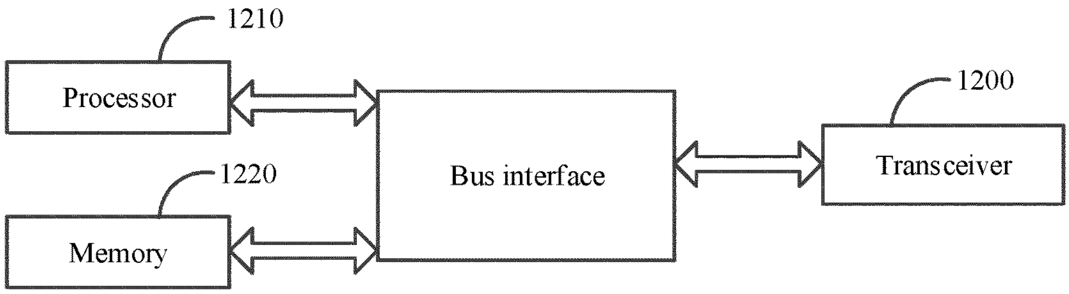


FIG. 12

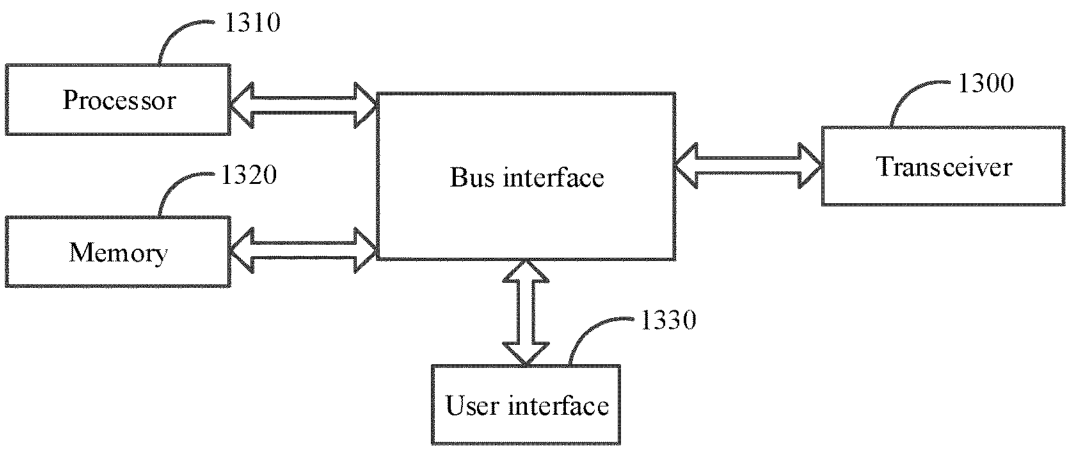


FIG. 13

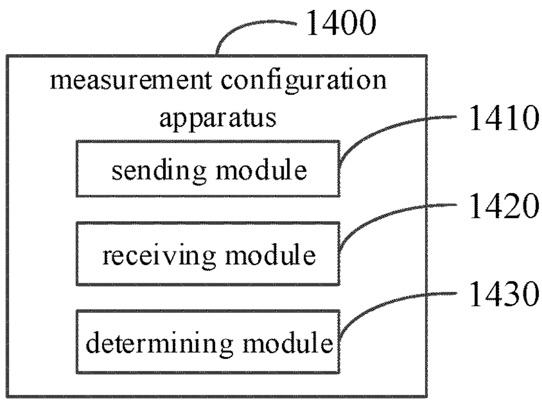


FIG. 14

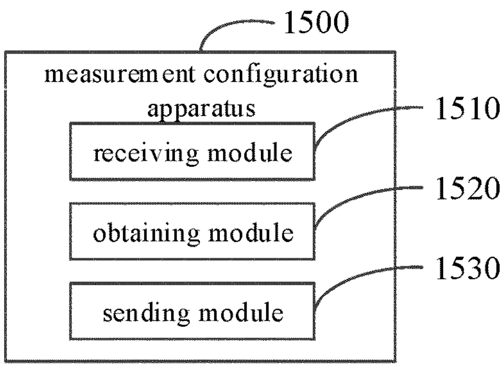


FIG. 15

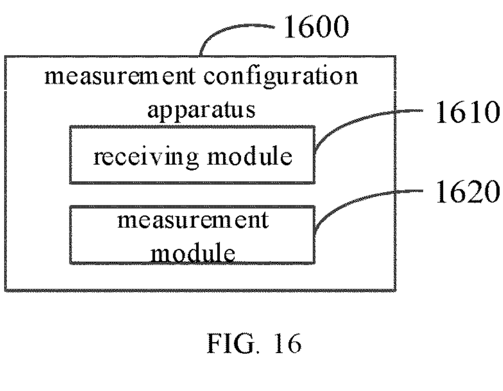


FIG. 16

## INTERNATIONAL SEARCH REPORT

International application No.
**PCT/CN2024/083078**

**A. CLASSIFICATION OF SUBJECT MATTER**

H04B7/185(2006.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, EPTXT, USTXT, VEN, WOTXT: 测量, 波束, 窗口, 辅助, 基站, 配置, 请求, 响应, 信息, base station, beam, information, RRM, SSB, measure, window, response, configuration, request

**C. DOCUMENTS CONSIDERED TO BE RELEVANT**

| Category* | Citation of document, with indication, where appropriate, of the relevant passages | Relevant to claim No. |
|---|---|---|
| X | WO 2022031562 A1 (QUALCOMM INC.) 10 February 2022 (2022-02-10) description, paragraphs 0005-0017, 0031, and 0078 | 1, 9-11, 20, 23-24, 32-34, 43, 46-52 |
| A | CN 106341899 A (ZTE CORP.) 18 January 2017 (2017-01-18) entire document | 1-52 |
| A | CN 112751603 A (HUAWEI TECHNOLOGIES CO., LTD.) 04 May 2021 (2021-05-04) entire document | 1-52 |
| A | WO 2022157735 A1 (TELEFONAKTIEBOLAGET LM ERICSSON (PUBL)) 28 July 2022 (2022-07-28) entire document | 1-52 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **21 May 2024** | **21 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/083078**

| Patent document cited in search report | | | Publication date (day/month/year) | Patent family member(s) | | | Publication date (day/month/year) |
|---|---|---|---|---|---|---|---|
| WO | 2022031562 | A1 | 10 February 2022 | KR | 20230047098 | A | 06 April 2023 |
| | | | | US | 2023224738 | A1 | 13 July 2023 |
| | | | | EP | 4193652 | A1 | 14 June 2023 |
| | | | | BR | 112023001366 | A2 | 14 February 2023 |
| CN | 106341899 | A | 18 January 2017 | WO | 2017008508 | A1 | 19 January 2017 |
| CN | 112751603 | A | 04 May 2021 | None | | | |
| WO | 2022157735 | A1 | 28 July 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310431470